# EUROPEAN PATENT APPLICATION

(11) **EP 4 383 695 A1**
(43) Date of publication of application: **12.06.2024**
(21) Application number: 22853357.6
(22) Date of filing: 28.07.2022
(51) Int. Cl.: H04N 5/00

(54) **CAMERA DEVICE AND OPTICAL DEVICE COMPRISING SAME**

(30) Priority: 03.08.2021 KR 20210101885
(71) Applicant: LG INNOTEK CO., LTD., Seoul 07796 (KR)
(72) Inventor: JANG, Jung In, Seoul 07796 (KR); KWON, Jae Wook, Seoul 07796 (KR); OH, Jun Seok, Seoul 07796 (KR)
(74) Representative: DREISS Patentanwälte PartG mbB
(86) International application number: PCT/KR2022/011141
(87) International publication number: WO 2023/013979

(57) **Abstract**

An embodiment includes: a lens assembly including a fixed lens group and a first lens group that is movable in a first axis direction; an image sensor which detects light passing through the fixed lens group and the first lens group; an optical member which irradiates light to the fixed lens group and is tiltable with respect to a second axis or a third axis, which are perpendicular to the first axis; and a control unit storing correction values for correcting the tilt of an optical axis of the lens assembly.

## Description

### [Technical Field]

Embodiments relate to a camera device and an optical instrument including the same.

### [Background Art]

A camera device is a device for taking pictures or videos of a subject, and is mounted in portable devices, drones, vehicles, and the like. In order to improve image quality, a camera device may have an image stabilization (IS) function for correcting or preventing shaking of an image caused by movement of a user, e.g., optical image stabilizer (OIS), an autofocus (AF) function, and/or a zoom function.

### [Disclosure]

### [Technical Problem]

Embodiments provide a camera device capable of correcting deviation (or tilt) of an optical axis (or optical center) caused by distortion of a lens assembly or a lens, preventing distortion of an image, and improving resolution and an optical instrument including the same.

### [Technical Solution]

A camera device according to an embodiment includes a lens assembly including a fixed lens group and a first lens group configured to be movable in a first-axis direction, an image sensor configured to detect light having passed through the fixed lens group and the first lens group, an optical member configured to emit light to the fixed lens group and to be tiltable with respect to a second axis or a third axis perpendicular to the first axis, and a controller configured to store a correction value to correct tilt of an optical axis of the lens assembly.

The correction value may be a value related to an initial position of the optical member for correction of distortion of the center of the fixed lens group and the center of the first lens group.

The camera device may include a first position sensor configured to detect displacement of the optical member with respect to the second axis and a second position sensor configured to detect displacement of the optical member with respect to the third axis, and the correction value may include a data value related to output from the first position sensor corresponding to the initial position of the optical member.

The correction value may be a value corresponding to the tilt amount of the optical axis of the lens assembly at a predetermined position of the first lens group.

The first lens group may be a lens for zoom magnification conversion. The predetermined position may a position corresponding to the highest magnification among the zoom magnifications of the zoom lens. Alternatively, the predetermined position may be a position corresponding to the lowest magnification among the zoom magnifications of the zoom lens. Alternatively, the predetermined position may be a position corresponding to an intermediate magnification between the highest magnification and the lowest magnification among the zoom magnifications of the zoom lens.

The controller may control tilt of the optical member using the correction value to perform hand-shake compensation operation.

The controller may move the lens assembly in the optical-axis direction to perform zoom or autofocus operation in a state of controlling tilt of the optical member using the correction value.

The controller may include a first driver configured to control movement of the first lens group and a second driver configured to store the correction value and to control tilt of the optical member using the correction value.

The correction value may be generated based on a deviation between a coordinate value of the center of an imaging area of the image sensor and a coordinate value of a first position of the imaging area of the image sensor, with which the optical axis of the lens assembly is aligned by distortion of the lens assembly.

A camera device according to another embodiment includes a lens assembly including a fixed lens group and a moving lens group configured to be movable in a first-axis direction, an image sensor configured to detect light having passed through the fixed lens group and the moving lens group, an optical member configured to emit light to the lens assembly and to be tiltable with respect to a second axis or a third axis perpendicular to the first axis, and a controller configured to store a correction value to correct distortion of an optical axis of the lens assembly corresponding to zoom magnification information about the moving lens group, wherein the controller controls tilt of the optical member based on the correction value.

The moving lens group may include a zoom lens group and a focus lens group.

A camera device according to still another embodiment includes a lens assembly including a fixed lens group and a first lens group configured to be movable in a first-axis direction, an image sensor configured to detect light having passed through the fixed lens group and the first lens group, an optical member configured to emit light to the fixed lens group and to be tiltable with respect to a second axis or a third axis perpendicular to the first axis, and a memory configured to store a correction value to correct tilt of an optical axis of the lens assembly.

### [Advantageous Effects]

Embodiments may control tilt of an optical member of a second actuator to change a horizontal path of light radiated to a lens assembly of a first actuator, thereby correcting deviation (or tilt) of an optical center caused by distortion of a lens assembly or a lens.

Since the embodiments correct deviation (or tilt) of the optical center caused by distortion of the lens assembly or the lens, it may be possible to prevent distortion of an image due to tilt of the optical center.

Since the embodiments prevent distortion of an image, it may be possible to improve the resolution of an image sensor.

### [Description of Drawings]

FIG. 1 is a perspective view of a camera device according to an embodiment.
FIG. 2 is an exploded perspective view of the camera device in FIG. 1.
FIG. 3 is a cross-sectional view of the camera device taken along line AB in FIG. 1.
FIG. 4 is a perspective view of a second actuator shown in FIG. 1.
FIG. 5 is an exploded perspective view of the second actuator.
FIG. 6A is a front perspective view of a holder in FIG. 5.
FIG. 6B is a rear perspective view of the holder.
FIG. 6C is a lower perspective view of the holder.
FIG. 7 is an exploded perspective view of the holder, a mover plate, and a magnetic body support part.
FIG. 8A is an exploded perspective view of the holder, to which an optical member, the mover plate, and an OIS magnet are coupled, and the magnetic body support part.
FIG. 8B is a coupled perspective view of the optical member, the mover plate, the OIS magnet, and the magnetic body support part.
FIG. 9A is a first perspective view of a first housing.
FIG. 9B is a second perspective view of the first housing.
FIG. 9C is an exploded perspective view of the first housing and a second magnetic body.
FIG. 10A is a perspective view of the first housing, the holder, the optical member, a first circuit board, and a cover plate.
FIG. 10B is a view for explaining electromagnetic force and movement of the mover plate according to interaction between first to third OIS magnets and first to third coil units.
FIG. 11A is a cross-sectional view of the second actuator taken along line CD in FIG. 4.
FIG. 11B is a cross-sectional view of the second actuator taken along line EF in FIG. 4.
FIG. 12 is a perspective view of a first actuator and an image sensing unit according to the embodiment.
FIG. 13A is a first exploded perspective view of the first actuator and the image sensing unit in FIG. 12.
FIG. 13B is a second exploded perspective view of the first actuator and the image sensing unit in FIG. 12.
FIG. 14A is a cross-sectional view of the first actuator and the image sensing unit taken along line ab in FIG. 12.
FIG. 14B is a cross-sectional view of the first actuator and the image sensing unit taken along line cd in FIG. 12.
FIG. 15 is an exploded perspective view of the first actuator.
FIG. 16A is an exploded perspective view of a second housing.
FIG. 16B is a perspective view of a body of the second housing.
FIG. 17A is a first perspective view of first and second guide parts and a lens unit.
FIG. 17B is a second perspective view of the first and second guide parts and the lens unit.
FIG. 18 is an exploded perspective view of first and second magnets and the lens unit.
FIG. 19 is a functional block diagram of the camera device according to the embodiment.
FIG. 20 is a flowchart showing a control method of a controller to perform zooming, AF, or hand-shake compensation of the camera device according to the embodiment.
FIG. 21 illustrates an embodiment of a method of generating a correction value for compensation of deviation caused by distortion of a lens.
FIG. 22 illustrates correction of deviation caused by distortion of a lens assembly or a lens and deviation caused by movement of an OIS moving unit.
FIG. 23 is a flowchart showing a control method of the controller to perform zooming, AF, or hand-shake compensation of the camera device according to another embodiment.
FIG. 24 illustrates a method of generating a correction value for correction of deviation caused by distortion of a lens corresponding to zoom magnification information.
FIG. 25 illustrates deviation or a tilt amount corresponding to sampling points acquired through the method according to the embodiment shown in FIG. 24.
FIG. 26A illustrates an embodiment of supply of information and a correction value related to a zoom position and a focus position.
FIG. 26B illustrates another embodiment of supply of information and a correction value related to a zoom position and a focus position.
FIG. 26C illustrates still another embodiment of supply of information and a correction value related to a zoom position and a focus position.
FIG. 26D illustrates still another embodiment of supply of information and a correction value related to a zoom position and a focus position.
FIG. 27 is a perspective view of an optical instrument according to an embodiment.
FIG. 28 is a configuration diagram of the optical instrument shown in FIG. 27.

### [Best Mode]

Hereinafter, embodiments of the present disclosure, which may concretely realize the objects described above, will be described with reference to the accompanying drawings.

In the following description of the embodiments, it will be understood that, when each element is referred to as being "on" or "under" another element, it can be directly on or under the other element, or can be indirectly formed such that one or more intervening elements are also present. In addition, when an element is referred to as being "on or under, " "under the element" as well as "on the element" may be included based on the element.

In addition, the relational terms "first," "second," "on/upper part/above," and "under/lower part/below" are used herein only to distinguish between one subject or element and another subject or element without necessarily requiring or involving any physical or logical relationship or sequence between such subjects or elements. Wherever possible, the same reference numerals will be used throughout the drawings to refer to the same parts.

Additionally, the terms "comprises," "includes," and "has" described herein should be interpreted not to exclude other elements but to further include such other elements, since the corresponding elements may be inherent unless mentioned otherwise. In addition, the term "corresponding to" described herein may encompass at least one of the meanings of "facing" and "overlapping."

Hereinafter, a camera device and an optical instrument including the same according to embodiments will be described with reference to the accompanying drawings. For convenience of description, a camera device according to an embodiment will be described using the Cartesian coordinate system (x,y,z), but the embodiments are not limited thereto, and may be described using other coordinate systems. In the respective drawings, the X-axis and the Y-axis may be directions perpendicular to the Z-axis, which is an optical-axis (OA) direction. In addition, the Z-axis direction, which is the optical-axis (OA) direction, may be referred to as a "first direction", the X-axis direction may be referred to as a "second direction", and the Y-axis direction may be referred to as a "third direction". In addition, the Y-axis may be referred to as a "first axis", and the Y-axis direction may be referred to as a "first-axis direction". The X-axis may be referred to as a "second axis", and the X-axis direction may be referred to as a "second-axis direction".

In addition, hereinafter, the "terminal" may alternatively be referred to as a pad, an electrode, or a conductive layer.

In addition, hereinafter, the "code value" may alternatively be referred to as data or a digital value.

In addition, in the embodiments, when two components are coupled to each other through coupling between a protrusion and a hole, one of the components may include a coupling protrusion (or coupling hole), and the remaining one of the components may include a coupling hole (or coupling protrusion) corresponding thereto.

A camera device according to an embodiment may perform a hand-shake compensation function, an autofocus function, and a zoom function. The "hand-shake compensation function" may be a function of moving a lens in a direction perpendicular to the optical-axial direction or tilting the lens with respect to the optical axis so as to cancel vibration (or motion) caused by shaking of the user's hand. In addition, the "autofocus function" may be a function of automatically focusing on a subject by moving the lens in the optical-axis direction according to a distance to the subject so that an image sensor obtains a clear image of the subject. The "zoom function" may be a function of photographing a subject while increasing or decreasing the magnification of a distant subject through a zoom lens for zoom magnification conversion.

Hereinafter, the "camera device" may alternatively be referred to as a "camera", a "camera module", an "imagecapturing device", or a "photographing device".

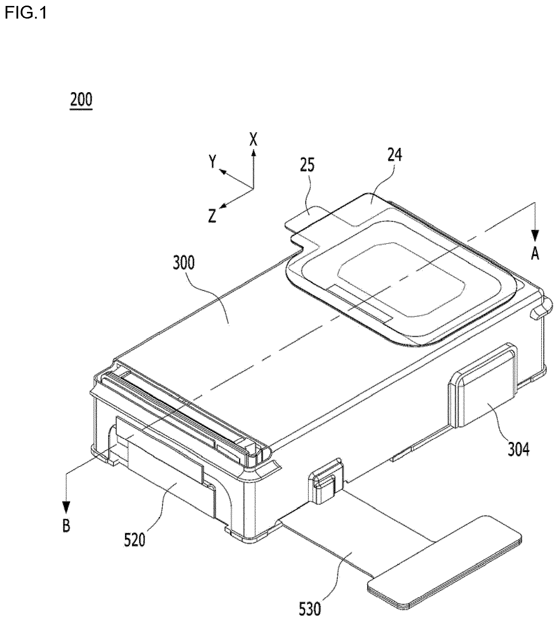

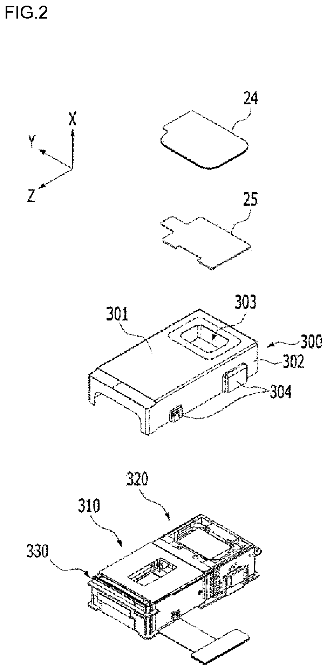

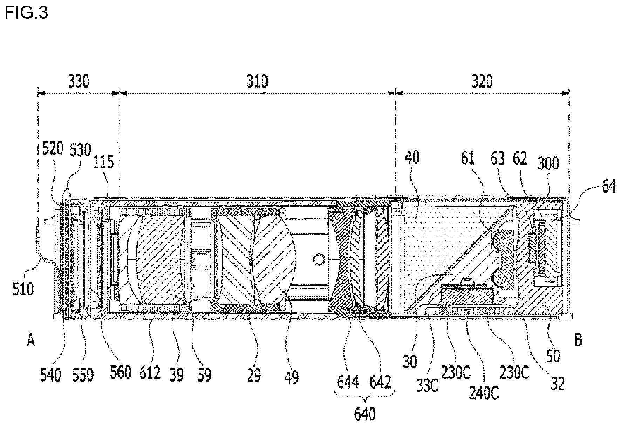

FIG. 1 is a perspective view of a camera device 200 according to an embodiment, FIG. 2 is an exploded perspective view of the camera device 200 in FIG. 1, and FIG. 3 is a cross-sectional view of the camera device taken along line AB in FIG. 1.

Referring to FIGs. 1 to 3, the camera device 200 may include a first actuator 310, a second actuator 320, and an image sensing unit 330.

The second actuator 320 may move an optical member 40, thereby performing optical image stabilizer (OIS) operation to implement hand-shake compensation, and may alternatively be referred to as a "second driving unit" or an "OIS driving unit".

The second actuator 320 may change the path of light. For example, the second actuator 320 may include an optical member 40 configured to change the path of light. The second actuator 320 may alternatively be referred to as an optical path changer.

The first actuator 310 may move lens assemblies 622 and 624 in the optical-axis direction, thereby performing an autofocus function and/or a zoom function. The first actuator 310 may alternatively be referred to as a "first driving unit" or an "AF and zoom driving unit". The first actuator 310 may be referred to as a "second actuator", and the second actuator 320 may be referred to as a "first actuator".

In an example, the first actuator 310 may be disposed on the rear end of the second actuator 320 and may be coupled to the second actuator 320.

The image sensing unit 330 may receive and detect light that has passed through the optical member 40 of the second actuator 320 and the lens assemblies 640, 622, and 624 of the first actuator 310, and may convert the detected light into an electrical signal.

The camera device 200 may further include a cover member 300. The cover member 300 may be formed in a shape of a box including an open lower portion, an upper plate 301, and a side plate 302. The cover member 300 of the camera device 200 may accommodate the first actuator 310, the second actuator 320, and the image sensing unit 330.

The upper plate 301 of the cover member 300 may include an opening 303 or a hole formed therein so as to expose an incidence surface of the optical member 40.

In addition, the camera device 200 may further include a bracket in order to accommodate the first actuator 310, the second actuator 320, and the image sensing unit 330. The bracket may include a hole or a through-hole formed therein so as to accommodate the first actuator 310, the second actuator 320, and the image sensing unit 330. At least one opening may be formed in a side portion or a side surface of the bracket.

The side plate 302 of the cover member 300 may include at least one protrusion 304 formed thereon so as to be coupled to the at least one opening in the bracket. The at least one protrusion 304 may protrude from the side plate 302 in a direction (e.g., Y-axis direction) perpendicular to the optical axis.

The cover member 300 may be formed as a metal plate, without being limited thereto, and may be formed of plastic or resin. Further, the cover member 300 may be made of a material that blocks electromagnetic waves.

The camera device 200 may further include a protective film 24 disposed on the upper plate 301 of the cover member 300 so as to cover the opening 303 in the cover member 300. The protective film 24 may be formed of a light transmissive material, may prevent foreign substances from entering the camera device 200, and may protect the optical member 40 from impact. In addition, the camera device 200 may further include a protective tape 25 disposed between the protective film 24 and the upper plate 301 in order to attach the protective film 24 to the upper plate 301.

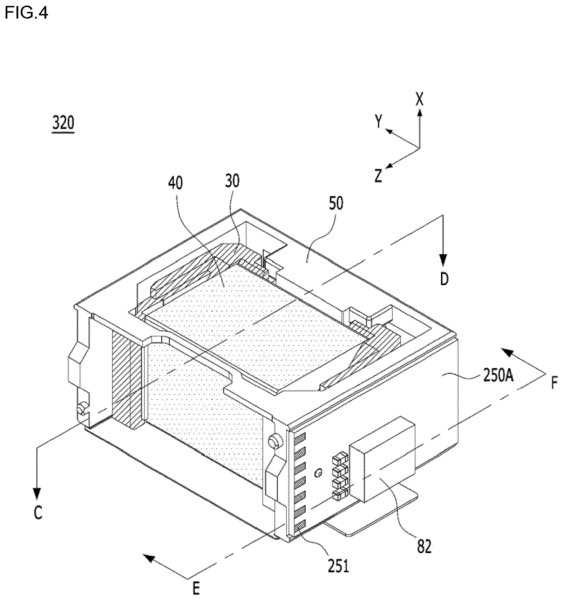

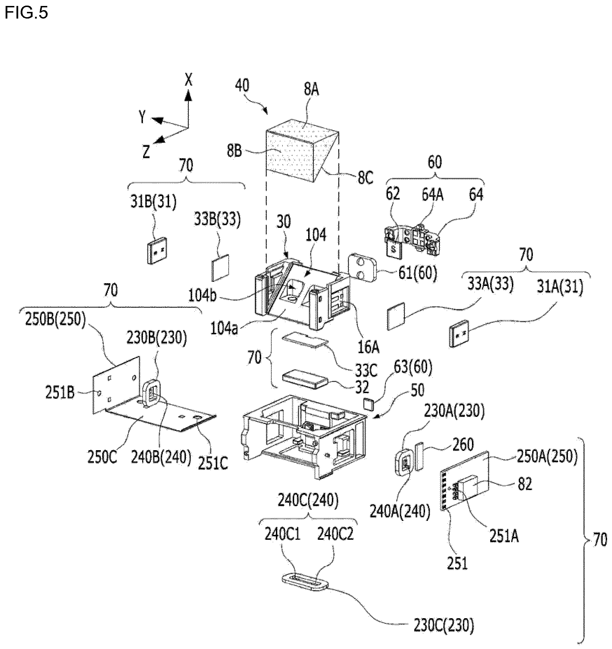

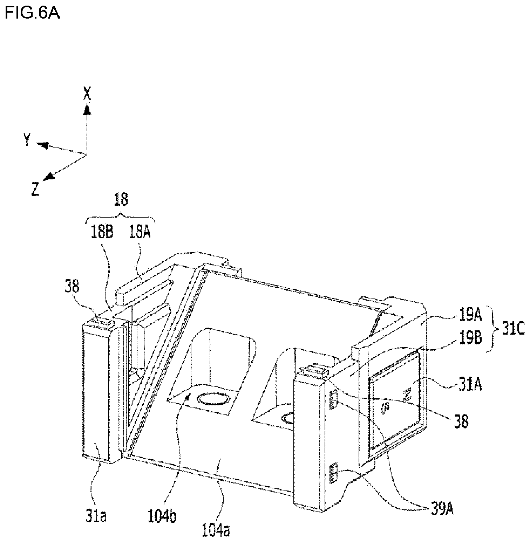

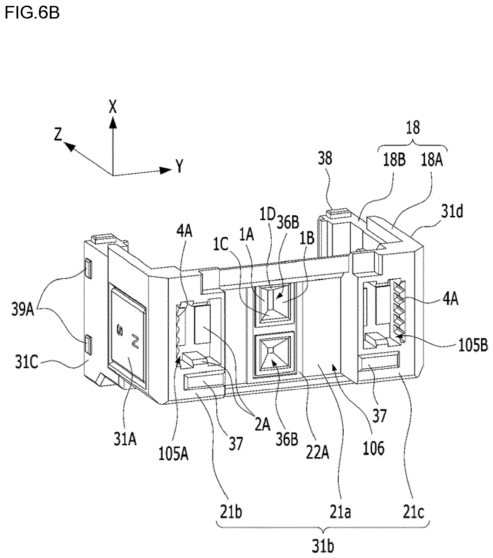

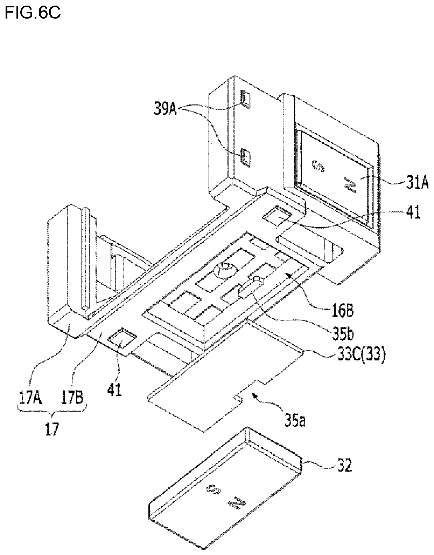

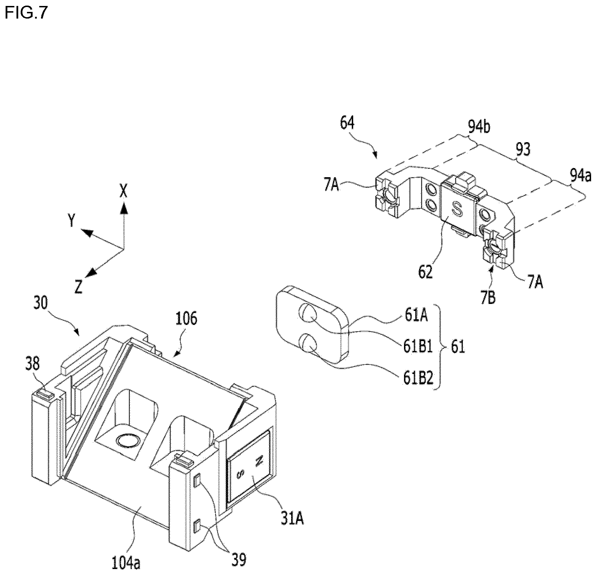

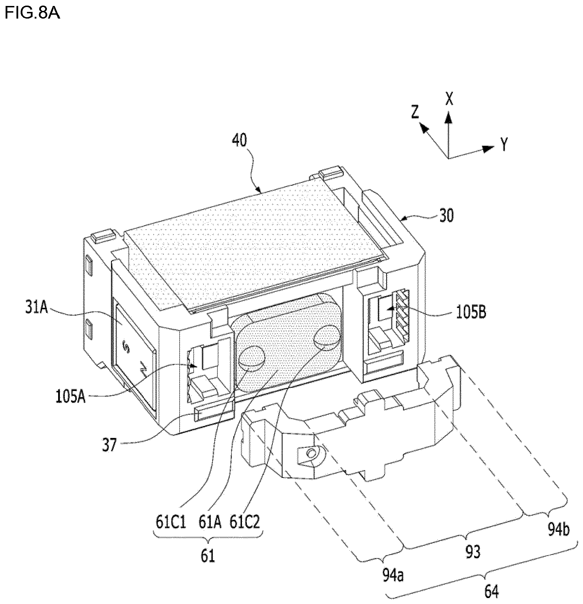

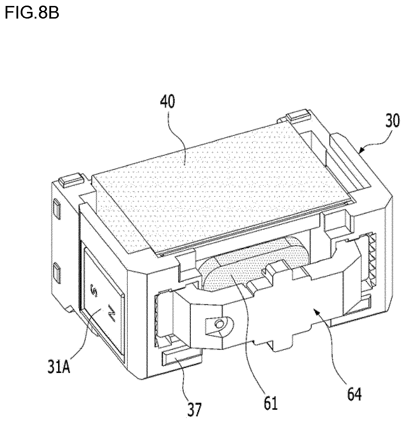

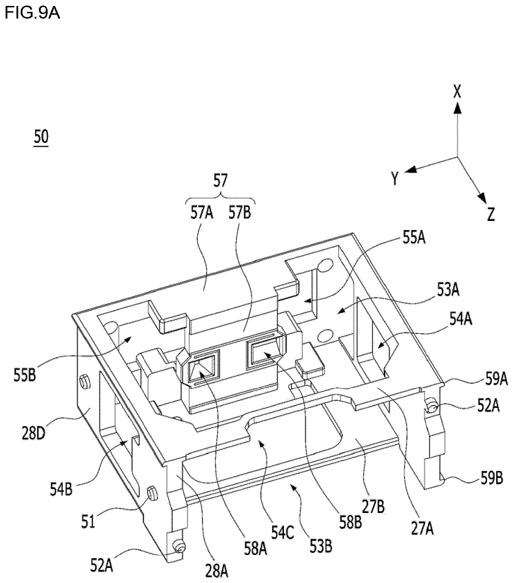

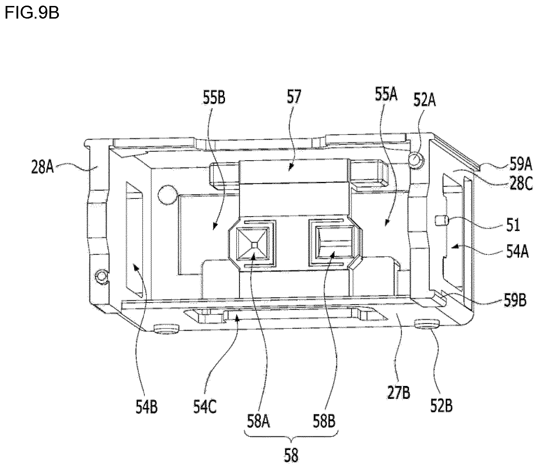

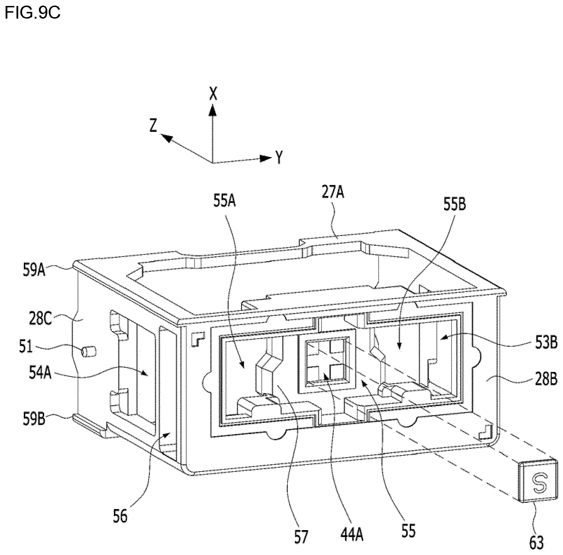

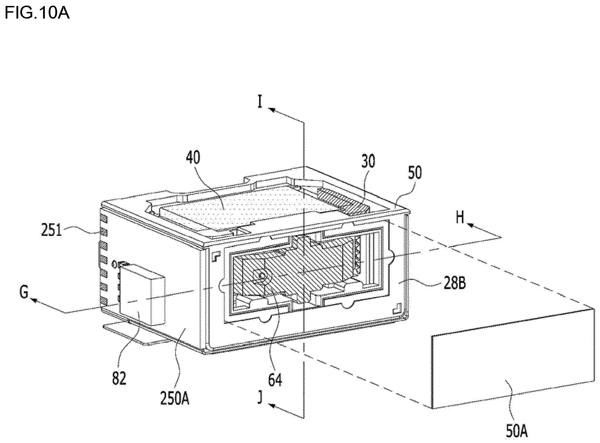

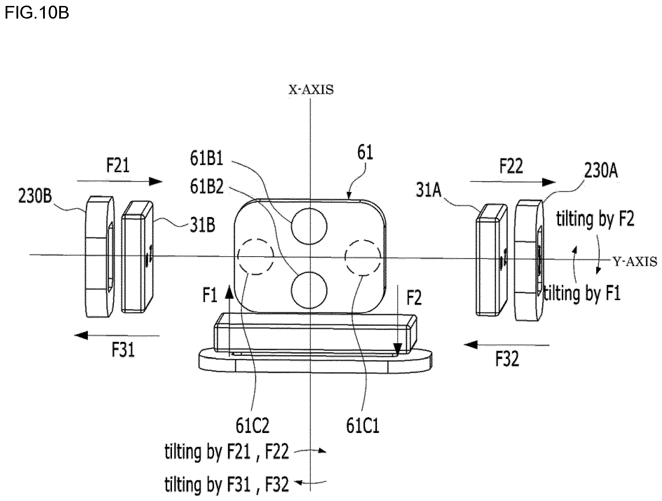

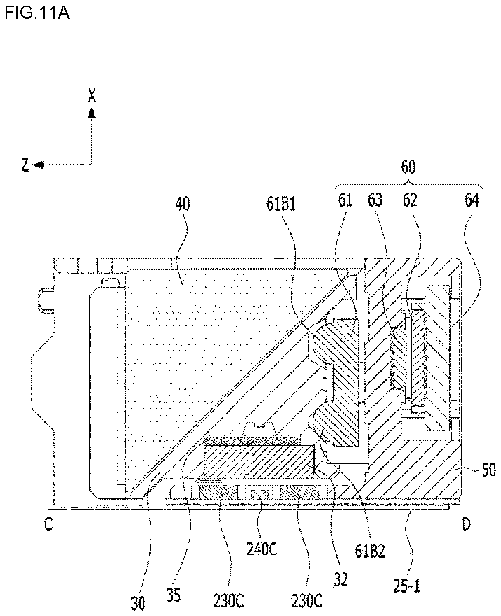

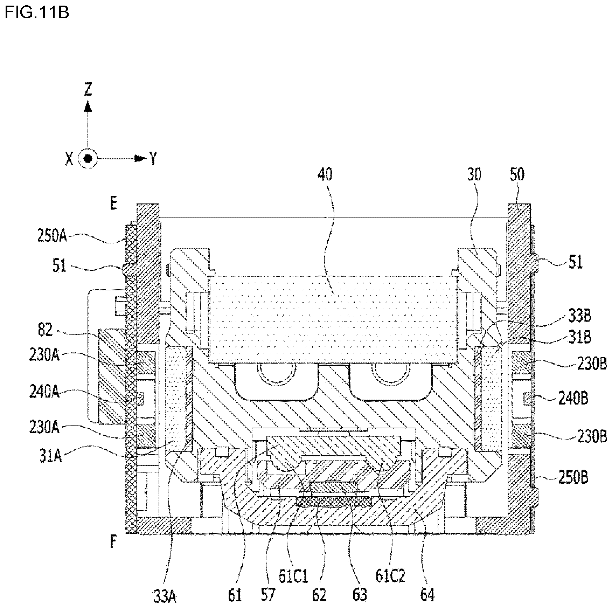

FIG. 4 is a perspective view of the second actuator 320 shown in FIG. 1, FIG. 5 is an exploded perspective view of the second actuator 320, FIG. 6A is a front perspective view of a holder 30 in FIG. 5, FIG. 6B is a rear perspective view of the holder 30, FIG. 6C is a lower perspective view of the holder 30, FIG. 7 is an exploded perspective view of the holder 30, a mover plate 61, and a magnetic body support part 64, FIG. 8A is an exploded perspective view of the holder 30, to which the optical member 40, the mover plate 61, and an OIS magnet 31 are coupled, and the magnetic body support part 64, FIG. 8B is a coupled perspective view of the optical member 40, the mover plate 61, the OIS magnet 31, and the magnetic body support part 64, FIG. 9A is a first perspective view of a first housing 50, FIG. 9B is a second perspective view of the first housing 50, FIG. 9C is an exploded perspective view of the first housing 50 and a second magnetic body 63, FIG. 10A is a perspective view of the first housing 50, the holder 30, the optical member 40, a first circuit board 250A, and a cover plate 51A, FIG. 10B is a view for explaining electromagnetic force and movement of the mover plate according to interaction between first to third OIS magnets 31A, 31B, and 32 and first to third coil units 230A to 230C, FIG. 11A is a cross-sectional view of the second actuator 320 taken along line CD in FIG. 4, and FIG. 11B is a cross-sectional view of the second actuator 320 taken along line EF in FIG. 4.

Referring to FIGs. 4 to 11B, the second actuator 320 may include an optical member 40 configured to change an optical path so that light that has passed through the opening 303 in the cover member 300 is introduced into the first actuator 310 and a second driving part 70 configured to rotate the optical member 40 at a predetermined angle in a direction (e.g., X-axis direction or Y-axis direction) perpendicular to the optical-axis direction (e.g., Z-axis direction).

The optical member 40 may include a reflective portion capable of changing the travel direction of light. For example, the optical member 40 may be a prism that reflects light. However, the disclosure is not limited thereto. In another embodiment, the optical member 40 may be a mirror.

The optical member 40 may change the optical path of incident light to the optical axis parallel to the central axis Z of the lens unit to convert the incident light into parallel light, and the parallel light may reach an image sensor 540 through the first lens assembly 640, the second lens assembly 622, and the third lens assembly 624.

In an example, the optical member 40 may include an incident surface 8A and an emission surface 8B, and may reflect light incident on the incident surface 81 and emit the light through the emission surface 8B. For example, the optical member 40 may be a right-angled prism including an incident surface 8A, a reflective surface 8C, and an emission surface 8B. For example, an internal angle between the incident surface 8A and the emission surface 8B may be a right angle.

In addition, for example, each of a first internal angle between the incident surface 8A and the reflective surface 8C and a second internal angle between the emission surface 8B and the reflective surface 8C may be 30 degrees to 60 degrees. For example, each of the first internal angle and the second internal angle may be 45 degrees. However, the disclosure is not limited thereto. In addition, due to change in the optical path by the optical member 40, the thickness of the camera device 200 in a direction perpendicular to the incident surface 8A of the optical member 40 may be reduced, and accordingly, the thickness of a mobile device or a terminal 200A in which the camera device 200 is mounted may be reduced.

In an example, the second actuator 320 may include a first housing 50, a holder 30 disposed in the first housing 50, an optical member 40 disposed in the holder 30, a support part 60 disposed between the holder 30 and the housing 50, and a second driving part 70.

Referring to FIGs. 5 and 6A to 6C, the holder 30 may include a seating part 104 on which the optical member 40 is disposed or mounted. The seating part 104 may have a recess shape and may include a mounting surface 104a (or seating surface) on which the reflective surface 8C of the optical member 40 is disposed. For example, the mounting surface 104a may be an inclined surface inclined with respect to the optical-axis direction.

In an example, an adhesive for attachment of the optical member 40 may be disposed on the mounting surface 104a of the holder 30, and at least one recess 104b for receiving the adhesive may be formed in the mounting surface 104a.

In an example, the holder 30 may include a first opening exposing the incident surface 8A of the optical member 40 and a second opening exposing the emission surface 8B of the optical member 40. In an example, the first opening may be formed in the upper side of the holder 30, and the second opening may be formed in one side surface 31a (front outer surface) of the holder 30 facing the lens assembly (e.g., 640) of the first actuator 310. The emission surface 8B of the optical member 40 mounted in the holder 30 may be disposed so as to face the lens assembly (e.g., 640) of the first actuator 310.

The upper surface 18 of the holder 30 may include a first surface 18A and a second surface 18B having a height difference from the first surface 18A in the second direction (e.g., X-axis direction). The first surface 18A may be located adjacent to or contiguous with a rear outer surface 31b of the holder 30, and the second surface 18B may be located adjacent to or contiguous with a front outer surface 31a of the holder 30. The second surface 18B may be located below the first surface 18A. In an example, the second surface 18B may be located closer to the lower surface 19 of the holder 30 than the first surface 18A.

Since the second surface 18B has a height difference from the first surface 18A, when the holder 30 is tilted in the second direction (e.g., X-axis direction) or rotated at a predetermined angle, spatial interference between the holder 30 and the first housing 50 may be prevented.

In an example, at least one stopper 38 may be formed on the upper surface (e.g., second surface 18B) of the holder 30. The stopper 38 may be a protrusion or a protruding portion that protrudes upward from the upper surface (e.g., second surface 18B) of the holder 30. In an example, the stopper 38 may be formed on the upper surface of each of first and second side portions of the holder 30. Tilt or rotation of the holder 30 in the second direction may be restricted by the stopper 38. In an example, the height of the upper surface of the stopper 38 may be lower than or equal to the height of the first surface 18A.

The holder 30 may include first and second side portions (or outer side surfaces) 31c and 31d facing each other. In an example, the seating part 104 may be located between the first side portion 31c and the second side portion 31d of the holder 30. In an example, the first side portion 31c and the second side portion 31d may be located opposite each other or located so as to face each other in the third direction (e.g., Y-axis direction).

Each of the first and second side portions 31c and 31d of the holder 30 may include a first outer side surface 19A and a second outer side surface 19B having a height difference from the first outer side surface 19A in the third direction (e.g., Y-axis direction). The first outer side surface 19A may be located adjacent to or contiguous with the rear outer surface 31b of the holder 30, and the second outer side surface 19B may be located adjacent to or contiguous with the front outer surface 31a of the holder 30. The second outer side surface 19B may be located closer to the inner side surface of the holder 30 than the first outer side surface 19A.

Since the second outer side surface 19B of the holder 30 has a height difference from the first outer side surface 19A, when the holder 30 is tilted in the third direction (e.g., Y-axis direction) or rotated at a predetermined angle, spatial interference between the holder 30 and the first housing 50 may be prevented.

In an example, at least one stopper 39A may be formed on the first and second side portions (e.g., second outer side surface 19B) of the holder 30. The stopper 39A may be a protrusion or a protruding portion that protrudes from the outer side surface (e.g., second outer side surface 19B) of each of the first and second side portions 31c and 31d of the holder 30. Tilt or rotation of the holder 30 in the third direction may be restricted by the stopper 39A. In an example, the protruding height of the stopper 39A from the second outer side surface 19B may be less than or equal to the height difference between the first outer side surface 19A and the second outer side surface 19B.

The lower surface 17 of the holder 30 may include a first surface 17A and a second surface 17B having a height difference from the first surface 17A in the second direction (e.g., X-axis direction). The first surface 17A may be located adjacent to or contiguous with the front outer surface 31a of the holder 30, and the second surface 17B may be located adjacent to or contiguous with the rear outer surface 31b of the holder 30. The first surface 17A may be located below the second surface 17B. In an example, the second surface 17B may be located closer to the upper surface 18 of the holder 30 than the first surface 17A.

Since the second surface 17B of the lower surface 17 of the holder 30 has a height difference from the first surface 17A, when the holder 30 is tilted in the second direction (e.g., X-axis direction) or rotated at a predetermined angle, spatial interference between the holder 30 and a second OIS coil 230C may be prevented.

In an example, at least one stopper 41 may be formed on the lower surface (e.g., second surface 17B) of the holder 30. The stopper 41 may be a protrusion or a protruding portion that protrudes downward from the lower surface (e.g., second surface 17B) of the holder 30. Tilt or rotation of the holder 30 in the second direction may be restricted by the stopper 41. In an example, the protruding length of the stopper 38 from the second surface 17B may be less than or equal to the height difference between the first surface 17A and the second surface 17B of the lower surface 17 of the holder 30.

The holder 30 may include a first seating recess 16A formed therein so as to allow a first OIS magnet 31 to be disposed or seated therein and a second seating recess 16B formed therein so as to allow a second OIS magnet 32 to be disposed or seated therein.

In an example, the first seating recess 16A may be formed in the outer side surface (e.g., first outer side surface 19A) of each of the first side portions 31c and 31d of the holder 30. For example, the first seating recess 16A may be formed in a shape of a recess depressed in the first outer side surface 19A of each of the first side portions 31c and 31d of the holder 30.

In an example, the second seating recess 16B may be formed in the lower surface 17 (e.g., second surface 16B) of the holder 30. For example, the second seating recess 16B may be formed in a shape of a recess depressed in the lower surface 17 (e.g., second surface 16B) of the holder 30.

Referring to FIG. 6B, the rear outer surface 31b of the holder 30 may include a first surface 21a, a second surface 21b that is adjacent to or contiguous with the first side portion 31c, and a third surface 21c that is adjacent to or contiguous with the second side portion 31d.

When viewed from rear, the first surface 21a may be disposed in the center, the second surface 21b may be disposed on the left of the first surface 21a, and the third surface 21c may be disposed on the right of the first surface 21a.

Each of the second surface 21b and the third surface 21c may have a height difference from the first surface 21a in the first direction (e.g., Z-axis direction). In an example, the first surface 21a may be located closer to the inner side surface of the holder 30 than each of the second surface 21b and the third surface 21c. In an example, the second surface 21b and the third surface 21c may be located on the same plane. Alternatively, in another example, the height difference between the first surface 21a and the second surface 21b may be identical to the height difference between the first surface 21a and the third surface 21c. However, the disclosure is not limited thereto. In another embodiment, the two height differences may be different from each other.

In an example, a recess 106 in which a mover plate 61 is seated or accommodated may be formed in the rear outer surface 31c of the holder 30. For example, the recess 106 may be disposed in the center of the rear outer surface 31c, and may be formed so as to be depressed in the rear outer surface 31c.

The holder 30 may include at least two recesses 36A and 36B formed in the first surface 21a of the rear outer surface 31c thereof so as to correspond to at least two front protrusions 61B1 and 61B2 of the mover plate 61. In an example, the at least two recesses 36A and 36B in the holder 30 may be arranged so as to be spaced apart from each other in the second direction, and may be formed in the bottom surface of the recess 106.

In an example, the holder 30 may include a first recess 36A formed in the first surface 21a of the rear outer surface 31c thereof and a second recess 36B spaced apart from the first recess 36A and located above the first recess 36A. In another embodiment, the first recess may be located above the second recess.

The first recess 36A may include a bottom surface and a plurality of side surfaces. The plurality of side surfaces of the first recess 36A may have the same shape. In FIG. 6B, the number of side surfaces of the first recess 36A is four. However, the disclosure is not limited thereto. In another embodiment, the number of side surfaces of the first recess may be five or more.

In an example, the plurality of side surfaces of the first recess 36A may have the same area. The plurality of side surfaces of the first recess 36A may be symmetrical to each other in the second direction and the third direction. For example, the bottom surface of the first recess 36A may have a square shape or a circular shape. However, the disclosure is not limited thereto.

In an example, the second recess 36B may include a bottom surface and a plurality of side surfaces 1A to 1D. The area of at least one of the plurality of side surfaces 1A to 1D of the second recess 36B may be different from the area of at least another one of the plurality of side surfaces 1A to 1D of the second recess 36B.

In an example, two side surfaces 1C and 1D of the second recess 36B facing each other in the second direction may be symmetrical to each other and may have the same area. In addition, two side surfaces 1A and 1B of the second recess 36B facing each other in the third direction may be symmetrical to each other and may have the same area.

The first area of each of the side surfaces 1C and 1D of the second recess 36B facing each other in the second direction may be different from the second area of each of the side surfaces 1A and 1D of the second recess 36B facing each other in the third direction. For example, the first area may be smaller than the second area. In another embodiment, the first area may be larger than the second area. For example, the bottom surface of the second recess 36B may have a rectangular shape or an elliptical shape. However, the disclosure is not limited thereto.

If both the first and second recesses in the holder 30 have the shape of the first recess 36A shown in FIG. 6B, manufacturing tolerances may occur in the first and second recesses in the holder 30 and/or the front protrusions of the mover plate 61, with the result that the front protrusions of the mover plate 61 may not be properly or stably coupled to the first and second recesses in the holder 30.

In the embodiment, since the second recess 36B is formed to have a different shape from the first recess 36A, a sufficient coupling margin may be ensured between the front protrusions 61B1 and 61B2 of the mover plate 61 and the first and second recesses 36A and 36B in the holder 30. That is, even if the aforementioned manufacturing tolerances occur, the front protrusions 61B1 and 61B2 of the mover plate 61 may be properly or stably coupled to the first and second recesses 36A and 36B in the holder 30 due to the second recess 36B, and OIS operation may be stably implemented.

A protruding portion 22A or a stepped portion may be formed around the first recess 36A and the second recess 36B. The protruding portion 22A may be formed so as to protrude from the first surface 21a of the rear outer surface 31c. A lubricant may be disposed between the front protrusions 61B1 and 61B2 and the first and second recesses 36A and 36B, and the protruding portion 22A may prevent the lubricant from overflowing.

The holder 30 may include at least one coupling recess 105A or 105B formed in the rear outer surface 31c thereof so as to be coupled to the magnetic body support part 64.

In an example, the holder 30 may include a first coupling recess 105A formed in the second surface 21b of the rear outer surface 31c thereof and a second coupling recess 105B formed in the third surface 21c of the rear outer surface 31c thereof.

In an example, at least one protrusion 2A (or recess) may be formed on at least one of the side surface or the bottom surface of each of the first and second coupling recesses 105A and 105B. In an example, the at least one protrusion 2A may correspond to at least one recess 7B in the magnetic body support part 64 or may be formed at a position corresponding to the at least one recess 7B.

Recesses 4A in which an adhesive is disposed may be formed in at least one of the side surface or the bottom surface of each of the first and second coupling recesses 105A and 105B. The recesses 4A may increase an adhesion area between the adhesive and the magnetic body support part 64 and may enhance coupling between the holder 30 and the magnetic body support part 64.

The holder 30 may include at least one stopper 37 formed on the rear outer surface 31c. In an example, the stopper 37 may be formed in a shape of a protrusion or a protruding portion that protrudes from each of the second surface 21b and the third surface 21c of the rear outer surface 31c.

The first housing 50 may be disposed in the cover member 300. In an example, an adhesive or a shield member may be disposed between the first housing 50 and the cover member 300, and the first housing 50 may be coupled or fixed to the cover member 300. The holder 30 may be disposed in the first housing 50. The first housing 50 may accommodate the holder 30 therein, and may expose the incident surface 8A and the emission surface 8B of the optical member 40 disposed in the holder 30.

Referring to FIGs. 9A to 9C, in an example, the first housing 50 may include a first opening 53A (or first hole) formed therein so as to expose the incident surface 8A of the optical member 40 and a second opening 53B (or second hole) formed therein so as to expose the emission surface 8B of the optical member 40.

The first housing 50 may include an upper portion 27A, a lower portion 27B, and a plurality of side portions 28A to 28D disposed between the upper portion 27A and the lower portion 27. The upper portion 27A and the lower portion 27B may face each other or may be located opposite each other in the second direction (e.g., X-axis direction).

In an example, the first housing 50 may include a first side portion 28A, a second side portion 28B, a third side portion 28C, and a fourth side portion 28D.

In an example, the first side portion 28A of the first housing 50 may be disposed so as to oppose or face the lens assembly (e.g., 640) of the first actuator 310. The first opening 53A may be formed in the upper portion 27A, and the second opening 53B may be formed in the first side portion 28A.

The second side portion 28B may face the first side portion 28A or may be located opposite the first side portion 28A in the first direction. The third side portion 28C and the fourth side portion 28D may be disposed between the first side portion 28A and the second side portion 28D, and may face each other or may be located opposite each other in the third direction. In an example, the third side portion 28C may connect one end of the first side portion 28A to one end of the second side portion 28B, and the fourth side portion 28D may connect the other end of the first side portion 28A to the other end of the second side portion 28B.

In an example, the first housing 50 may include a first hole 54A formed in the third side portion 28C thereof so as to allow a first OIS coil unit 230A to be seated or disposed therein, a second hole 54B formed in the fourth side portion thereof so as to allow a second OIS coil unit 230B to be seated or disposed therein, and a third hole 54C formed in the lower portion 27B thereof so as to allow a third OIS coil unit 230C to be seated or disposed therein. For example, each of the first to third holes 54A to 54C may have a through-hole shape. However, the disclosure is not limited thereto. In another embodiment, each of the first to third holes may have a recess shape.

In addition, a recess 56 (or through-hole) in which a second driver 260 is disposed or seated may be formed in the third side portion 28C (or fourth side portion 28D) of the first housing 50. In an example, the recess 56 may be formed so as to be spaced apart from the first hole 54A.

The first housing 50 may include at least one coupling protrusion 51 formed on at least one of the third side portion 28C or the fourth side portion 28D. In an example, the coupling protrusion 51 may protrude from the outer side surface of each of the third side portion 28C and the fourth side portion 28D. In addition, the first housing 50 may include at least one coupling protrusion 52A formed on the first side portion 28A. In an example, the coupling protrusion 52A may protrude from the outer side surface of the first side portion 28A.

In addition, the first housing 50 may include at least one coupling protrusion 52B formed on the lower portion 28B. In an example, the coupling protrusion 52B may be formed so as to protrude from the outer surface of the lower portion 28B.

Guide protrusions 59A and 59B for guiding a first circuit board 250A may be formed on at least one of the upper end or the lower end of the third side portion 28C of the first housing 50. In addition, a guide protrusion for guiding a second circuit board 250B may be formed on at least one of the upper end or the lower end of the fourth side portion 28D of the first housing 50.

The first housing 50 may include at least two recesses 58A and 58B formed in the second side portion 28B thereof so as to correspond to at least two rear protrusions 61C1 and 61C2 of the mover plate 61. In an example, the at least two recesses 58A and 58B in the first housing 50 may be arranged so as to be spaced apart from each other in the third direction.

A protruding portion or a stepped portion may be formed around the at least two recesses 58A and 58B, and a lubricant may be disposed between the rear protrusions and the recesses 58A and 58B. The description of the protruding portion 22A may be equally or similarly applied thereto.

In an example, the first housing 50 may include a protruding portion 57 protruding from the inner side surface of the second side portion 28B toward the first side portion 28A, and a first recess 58A and a second recess 58B that correspond to, face, or overlap the rear protrusions 61C1 and 61C2 of the mover plate 61 may be formed in the protruding portion 57.

In an example, the protruding portion 57 may include a first portion 57A protruding from the inner side surface of the second side portion 28B and a second portion 57B connecting the first portion 57A to the lower portion 27B of the first housing 50.

The first recess 58A and the second recess 58B in the first housing 50 may be formed in the inner side surface (or front surface) of the second portion 57B of the protruding portion 57.

In addition, a recess 44A in which a second magnetic body 63 is disposed or seated may be formed in the rear surface of the protruding portion 57.

The description of the shapes of the first and second recesses 36A and 36B in the holder 30 may be equally or similarly applied to the first and second recesses 58A and 58B in the first housing 50.

In the embodiment, since the second recess 58B in the first housing 50 is formed to have a different shape from the first recess 58A, a sufficient coupling margin may be ensured between the rear protrusions 61C1 and 61C2 of the mover plate 61 and the first and second recesses 58A and 58B in the housing 50. That is, even if manufacturing tolerances occur in the rear protrusions of the mover plate 61 and the first and second recesses in the first housing, the rear protrusions 61C1 and 61C2 of the mover plate 61 may be properly or stably coupled to the first and second recesses 58A and 58B in the first housing 50 due to the second recess 58B, and accordingly, OIS operation may be stably implemented.

In FIG. 9B, when the first housing 50 is viewed from the front, the first recess 58A is located on the left, and the second recess 58B is located on the right. However, the disclosure is not limited thereto. In another embodiment, the first recess 58A may be located on the right, and the second recess 58B may be located on the left.

In an example, an opening 55 in which the magnetic body support part 64 is disposed may be formed in the second side portion 28B of the first housing 50.

In addition, at least one through-hole may be formed in the second side portion 28B of the first housing 50. In an example, a first through-hole 55A and a second through-hole 55B may be formed in the second side portion 28B of the first housing 50.

As shown in FIG. 9C, when viewed from the rear of the first housing 50, the first through-hole 55A may be located on one side (e.g., right side) of the protruding portion 57 of the first housing 50, and the second through-hole 55B may be located on the other side (e.g., left side) of the protruding portion 57.

Next, the support part 60 will be described.

The support part 60 may be disposed between the holder 30 and the first housing 50, and may support the holder 30 with respect to the first housing 50.

The support part 60 may include a mover plate 61 disposed between the holder 30 and the first housing 50.

The mover plate 61 may include at least two front protrusions 61B1 and 61B2 that are coupled to the holder 30 and at least two rear protrusions 61C1 and 61C2 that are coupled to the first housing 50.

In an example, the at least two front protrusions 61B1 and 61B2 may be arranged so as to be spaced apart from each other in the second direction. Each of the front protrusions 61B1 and 61B2 may be disposed in a corresponding one of the first and second recesses 36A and 36B in the holder 30.

In an example, the at least two rear protrusions 61C1 and 61C2 may be arranged so as to be spaced apart from each other in the third direction. Each of the rear protrusions 61C1 and 61C2 may be disposed in a corresponding one of the first and second recesses 58A and 58B in the first housing 50.

In an example, the mover plate 61 may include a body 61A disposed in the recess 106 in the holder 30, front protrusions 61B1 and 61B2 protruding from the front surface of the body 61A, and rear protrusions 61C1 and 61C2 protruding from the rear surface of the body 61A. In an example, the front protrusions 61B1 and 61B2 and the rear protrusions 61C1 and 61C2 may protrude in opposite directions.

For example, each of the front protrusions 61B1 and 61B2 may have a curved shape, a hemispherical shape, a dome shape, or a polyhedral shape. However, the disclosure is not limited thereto. Also, for example, each of the rear protrusions 61C1 and 61C2 may have a curved shape, a hemispherical shape, a dome shape, or a polyhedral shape. However, the disclosure is not limited thereto.

In another embodiment, front recesses may be formed in the front surface of the mover plate instead of the front protrusions, and rear recesses may be formed in the rear surface of the mover plate instead of the rear protrusions. In addition, protrusions for engagement with the front recesses in the mover plate may be formed on the holder instead of the first and second recesses 36A and 36B, and protrusions for engagement with the rear recesses in the mover plate may be formed on the first housing instead of the first and second holes 58A and 58B.

For example, the mover plate 61 may be made of an injection-molded material such as plastic or resin. In another embodiment, the mover plate 61 may be made of metal, e.g., SUS. Further, the mover plate 61 may be non-magnetic. In another embodiment, the mover plate may be magnetic.

The support part 60 may further include a first magnetic body 62 coupled to the holder 30 and a second magnetic body 63 coupled to the first housing 40.

The support part 60 may further include a magnetic body support part 64, on which the first magnetic body 62 is disposed and which is coupled to the holder 30. In an example, the magnetic body support part 64 may pass through at least a portion of the first housing 40 to be coupled to the holder 30.

Referring to FIGs. 7 to 10, the magnetic body support part 64 may include a body 93, on which the first magnetic body 62 is disposed, a first extension portion 94a, which extends from one side of the body 93 and is coupled to the first coupling recess 105A in the holder 30 through the first through-hole 55A in the first housing 50, and a first extension portion 94b, which extends from the other side of the body 93 and is coupled to the second coupling recess 105B in the holder 30 through the second through-hole 55B in the first housing 50.

A recess 64a in which the first magnetic body 62 is seated or disposed may be formed in the front surface of the body 93 of the magnetic body support part 64. In an example, the first magnetic body 62 may be coupled to the recess 64a in the magnetic body support part 64 by means of an adhesive. In addition, in an example, the extension portions 94a and 94b of the magnetic body support part 64 may be coupled to the coupling recesses 105A and 105B in the holder 30 by means of an adhesive.

The second magnetic body 63 may be disposed on the second side portion 28B of the first housing 50. In an example, the second magnetic body 63 may be disposed on the protruding portion 57 of the first housing 50. In an example, the second magnetic body 63 may be disposed in the recess 44A in the protruding portion 57 of the first housing 50. In an example, the second magnetic body 63 may be coupled to the recess 44a in the first housing 50 by means of an adhesive.

Referring to FIGs. 11A and 11B, the first magnetic body 62 and the second magnetic body 63 may be disposed so as to face or overlap each other in the first direction.

The second magnetic body 63 may be disposed between the first magnetic body 62 and the mover plate 61. In the embodiment, the mover plate 61 is not located between the first magnetic body 62 and the second magnetic body 63, and both the first magnetic body 62 and the second magnetic body 64 are disposed on one side of the mover plate 61. Therefore, a spacing distance between the first magnetic body 62 and the second magnetic body 63 may be reduced, and accordingly, magnetic force (e.g., repulsive force) between the first magnetic body 62 and the second magnetic body 63 may be increased.

The mover plate 61 may be pressed against the holder 30 and/or the first housing 50 by the repulsive force between the first and second magnetic bodies 62 and 63, and may be in tight contact with the holder 30 and/or the first housing 50. In the embodiment, since the magnetic force (e.g., repulsive force) between the first magnetic body 62 and the second magnetic body 63 is large, the mover plate 61 may stably support the holder 30, and accordingly, OIS operation may be stably implemented.

Referring to FIG. 11A, the length of the first magnetic body 62 in the second direction may be longer than the length of the second magnetic body 63 in the second direction. Further, referring to FIG. 11B, the length of the first magnetic body 62 in the third direction may be longer than the length of the second magnetic body 63 in the third direction. In another embodiment, the length of the first magnetic body 62 in the second direction may be equal to or shorter than the length of the second magnetic body 63 in the second direction, and the length of the first magnetic body 62 in the third direction may be equal to or shorter than the length of the second magnetic body 63 in the third direction.

In an example, the area of the first surface of the first magnetic body 62 facing the second magnetic body 63 may be larger than the area of the first surface of the second magnetic body 63 facing the first magnetic body 62. In another embodiment, the area of the first surface of the first magnetic body may be equal to or smaller than the area of the first surface of the second magnetic body.

Repulsive force may act between the first magnetic body 62 and the second magnetic body 63. The first magnetic body 62 may include a first magnet, and the second magnetic body 63 may include a second magnet that exerts repulsive force on the first magnet. In addition, in an example, the first magnetic body 62 may further include a first yoke that corresponds to the first magnet and is disposed in the recess 64a. In an example, the second magnetic body 63 may further include a second yoke that corresponds to the second magnet and is disposed in the recess 44A in the first housing 50. The first yoke and the second yoke may increase magnetic force (e.g., repulsive force) acting between the first magnetic body 62 and the second magnetic body 63.

In an example, the surfaces of the first magnetic body 62 and the second magnetic body 63 facing each other may have the same polarity (N pole or S pole).

In another embodiment, attractive force may act between the first magnetic body and the second magnetic body, and in this case, the surfaces of the first magnetic body and the second magnetic body facing each other may have opposite polarities.

Next, the second driving part 70 will be described.

The second driving part 70 tilts the holder 30 in the second or third direction or rotates the holder 30 at a predetermined angle.

The second driving part 70 may include an OIS magnet 31, an OIS coil 230, an OIS position sensor unit 240, and a first board unit 250.

The OIS magnet 31 may be disposed in the holder 30. In an example, the OIS magnet 31 may include first OIS magnets 31A and 31B and a second OIS magnet 32.

In an example, the first OIS magnet may include a first magnet unit 31A disposed on the first side portion 31c of the holder 30 and a second magnet unit 31B disposed on the second side portion 31d of the holder 30. In an example, the first magnet unit 31A may face or overlap the second magnet unit 31B in the third direction. In an example, the first magnet unit 31A may be disposed in the first seating recess 16A in the first side portion 31c of the holder 30, and the second magnet unit 31B may be disposed in the first seating recess 16A in the second side portion 31d of the holder 30.

The second OIS magnet may include a third magnet unit 32 disposed on the lower surface 17 of the holder 30. The third magnet unit 32 may be disposed in the second seating recess 16B in the holder 30.

Each of the first to third magnet units 31A, 31B, and 32 may be a monopolar-magnetized magnet having one N pole and one S pole. However, the disclosure is not limited thereto. In another embodiment, each of the first to third magnet units may be a bipolar-magnetized magnet having two N poles and two S poles. In still another embodiment, at least one of the first to third magnet units 31A, 31B, and 32 may be a monopolar-magnetized magnet, and the remaining magnet units may be bipolar-magnetized magnets.

The OIS coil 230 may be disposed in the first housing 50 so as to correspond to or face the OIS magnet 31. In an example, the OIS coil 230 may include first OIS coils 230A and 230B, which correspond to, face, or overlap the first OIS magnets 31A and 31B in the third direction, and a second OIS coil 230C, which corresponds to, faces, or overlaps the second OIS magnet 32 in the second direction.

In an example, the first OIS coil may include a first OIS coil unit 230A, which corresponds to, faces, or overlaps the first magnet unit 31A in the third direction, and a second OIS coil unit 230B, which corresponds to, faces, or overlaps the second magnet unit 31B in the third direction. In an example, the second OIS coil may include a third OIS coil unit 230C, which corresponds to, faces, or overlaps the third magnet unit 32 in the second direction.

In an example, the first OIS coil unit 230A may be disposed on the third side portion 28C (e.g., in the first hole 34A) of the first housing 50, the second OIS coil unit 230B may be disposed on the fourth side portion 28D (e.g., in the second hole 54B) of the housing 50, and the third OIS coil unit 230C may be disposed on the lower portion 28B (e.g., in the third hole 54C) of the first housing 50.

For example, the first OIS coil unit 230A may have a closed curve or ring shape including a cavity or a hole. The first OIS coil unit 230A may be formed in a shape of a coil ring wound in the clockwise or counterclockwise direction about a third axis parallel to the third direction.

The second OIS coil unit 230B may have a closed curve or ring shape including a cavity or a hole. The second OIS coil unit 230B may be formed in a shape of a coil ring wound in the clockwise or counterclockwise direction about the third axis parallel to the third direction.

The third OIS coil unit 230C may have a closed curve or ring shape including a cavity or a hole. The third OIS coil unit 230C may be formed in a shape of a coil ring wound in the clockwise or counterclockwise direction about a second axis parallel to the second direction.

Referring to FIG. 10B, first electromagnetic forces F21, F22, F31, and F32 may be generated by interaction between the first OIS magnets 31A and 31B and the first OIS coils 230A and 230B. That is, the first electromagnetic forces may be generated by interaction between the first magnet unit 31A and the first OIS coil unit 230A and interaction between the second magnet unit 31B and the second OIS coil unit 230B. In an example, 1-1^{st} electromagnetic forces F22 and F32 may be generated by interaction between the first magnet unit 31A and the first OIS coil unit 230A, 1-2^{nd} electromagnetic forces F21 and F31 may be generated by interaction between the second magnet unit 31B and the second OIS coil unit 230B, and the first electromagnetic forces may include the 1-1^{st} electromagnetic forces F22 and F32 and the 1-2^{nd} electromagnetic forces F21 and F31.

In addition, second electromagnetic forces F1 and F2 may be generated by interaction between the second OIS magnet 32 and the third OIS coil unit 230C.

The OIS moving unit (e.g., holder 30) may undergo second-axis (e.g., X-axis) tilt due to the first electromagnetic forces F21, F22, F31, and F32. Here, the second-axis (e.g., X-axis) tilt means tilt of the OIS moving unit with respect to the second axis (X-axis) or rotation of the OIS moving unit at a predetermined angle about the second axis (X-axis).

The OIS moving unit may undergo third-axis (e.g., Y-axis) tilt due to the second electromagnetic forces F1 and F2. Here, the third-axis (Y-axis) tilt means tilt of the OIS moving unit with respect to the third axis or rotation of the OIS moving unit at a predetermined angle about the third axis.

In this case, the OIS moving unit may include the holder 30. In addition, the OIS moving unit may further include components that are coupled or mounted to the holder 30, e.g., the OIS magnets 31A, 31B, and 32, the yoke 33, and the magnetic body support part 64. In addition, the OIS moving unit may further include at least one of the mover plate 61 or the first magnetic body 62.

In addition, the first OIS coil unit 230A and the second OIS coil unit 230B may overlap each other in the third direction (Y-axis direction), and the first OIS magnet 31A and the second OIS magnet 31B may overlap each other in the third direction. Due to this arrangement, electromagnetic forces may be applied in a balanced manner to the first side portion 31c and the fourth side portion 31d of the holder 30, whereby the X-axis tilt may be performed accurately and precisely.

In another embodiment, the OIS moving unit (e.g., holder 30) may undergo third-axis (e.g., Y-axis) tilt due to the electromagnetic forces generated by interaction between the first OIS magnets 31A and 31B and the first OIS coils 230A and 230B, and may undergo second-axis (e.g., X-axis) tilt due to the electromagnetic forces generated by interaction between the second OIS magnet 32 and the third OIS coil unit 230C.

The camera device 200 may further include yokes 33 (33A, 33B, and 33C) disposed on the OIS magnets 31 and 32.

In an example, the yokes 33 may include a first yoke 33A disposed on the first magnet unit 31A, a second yoke 33B disposed on the second magnet unit 31B, and a third yoke 33C disposed on the third magnet unit 32.

In an example, the first yoke 33A may be disposed in the first seating recess 16A in the first side portion 31c of the holder 30. In an example, the first yoke 33A may be disposed farther inward then the first magnet unit 31A. The second yoke 33B may be disposed in the first seating recess 16A in the second side portion 31d of the holder 30. In an example, the second yoke 33B may be disposed farther inward than the second magnet unit 31B. The third yoke 33C may be disposed in the second seating recess 16B in the holder 30. The third yoke 33C may be disposed farther inward than the third magnet unit 32. The first yoke 33A and the second yoke 33B may increase the first electromagnetic forces, and the third yoke 33C may increase the second electromagnetic forces.

In an example, a recess 35a may be formed in at least one (e.g., third yoke 33C) of the first to third yokes 33A to 33C, and a protrusion 35b corresponding to the recess 35a may be formed in at least one of the seating recesses 16A and 16B in the holder 30 (refer to FIG. 6C). The recess 35a and the protrusion 35b may enhance coupling between the yokes 33 and the holder 30.

A first board unit 250 may be disposed in the first housing 50. In an example, the first board unit 250 may be coupled to the first housing 50. The first board unit 250 may be conductively connected to the OIS coil 230 and may supply a driving signal to the OIS coil 230.

In an example, the first OIS coil unit 230A and the second OIS coil unit 230B may be connected to each other in series, and the first board unit 250 may supply a first driving signal to the first and second OIS coil units 230A and 230B connected to each other in series. In addition, the first board unit 250 may supply a second driving signal to the third OIS coil unit 230C.

The first board unit 250 may include a first circuit board 250A disposed on the third side portion 28C of the first housing 50, a second circuit board 250B disposed on the fourth side portion 28D of the first housing 50, and a third circuit board 250C disposed on the lower portion 27B of the first housing 50.

Although the first circuit board 250A is illustrated in FIG. 5 as being spaced apart from the third circuit board 250C, the first to third circuit boards 250A to 250C may be integrated into a single board and may be conductively connected to each other. In another embodiment, at least one of the first to third circuit boards may not be integrated with the remaining circuit boards but may be conductively connected thereto.

The first circuit board 250A may include a hole 251A formed therein so as to be coupled to the coupling protrusion 51 of the third side portion 28C of the first housing 50. In addition, the first circuit board 250A may include a plurality of terminals 251.

The first OIS coil unit 230A may be disposed or mounted on the first surface of the first circuit board 250A, and the plurality of terminals 251 may be disposed on the second surface of the first circuit board 250A. The first surface of the first circuit board 250A may be a surface facing the outer side surface of the third side portion 28C of the first housing 50. The second surface of the first circuit board 250A may be a surface opposite the first surface of the first circuit board 250A.

The first board unit 250 may include bent portions interconnecting the second circuit board 250B and the third circuit board 250C and interconnecting the first circuit board 250A and the third circuit board 250C.

The second circuit board 250B may include a hole 251B formed therein so as to be coupled to the coupling protrusion 51 of the fourth side portion 28D of the first housing 50. The third circuit board 250C may include a hole 251C formed therein so as to be coupled to the coupling protrusion 52B of the lower portion 28B of the first housing 50.

The second OIS coil unit 230B may be disposed or mounted on the first surface of the second circuit board 250B. The first surface of the second circuit board 250B may be a surface facing the outer side surface of the fourth side portion 28C of the first housing 50.

The third OIS coil unit 230C may be disposed or mounted on the first surface of the third circuit board 250C. The first surface of the third circuit board 250C may be a surface facing the outer surface of the lower portion 28B of the first housing 50.

Such a first board unit 250 may include at least one of a rigid printed circuit board (PCB), a flexible printed circuit board (PCB), or a rigid flexible printed circuit board (PCB). In addition, the first board unit 250 may include a wiring pattern conductively connecting the components disposed on the first to third circuit boards 250A, 250B, and 250C to the plurality of terminals 251.

The camera device 200 may further include a gyro sensor 82 disposed on the first board unit 250. For example, the gyro sensor 82 may be a 2-axis, 3-axis, or 5-axis gyro sensor or an angular speed sensor.

The camera device 200 may further include a second driver 260 disposed on the first board unit 250. In an example, the second driver 260 may be disposed or mounted on the first circuit board 250A. In an example, the second driver 260 may be disposed in the first housing 50. In an example, the second driver 260 may be disposed or mounted on the first surface of the first circuit board 250A of the first housing 50.

The second driver 260 may be conductively connected to the first OIS coils 230A and 230B and the second OIS coil 230C. In addition, the second driver 260 may be conductively connected to the first OIS position sensors 240A and 240B and the second OIS position sensor 240C.

In an example, the second driver 260 may supply a driving signal to each of the first OIS position sensors 240A and 240B and the second OIS position sensor 240C, and may receive a first output signal from the first OIS position sensors 240A and 240B and a second output signal from the second OIS position sensor 240C.

In addition, in an example, the second driver 260 may supply the first driving signal (e.g., driving current or driving voltage) to the first OIS coils 230A and 230B, and may perform feedback control on the first driving signal using the first output signal from the first OIS position sensors 240A and 240B.

In addition, in an example, the second driver 260 may supply the second driving signal (e.g., driving current or driving voltage) to the second OIS coil 230C, and may perform feedback control on the second driving signal using the second output signal from the second OIS position sensor 240C. For example, the second driver 260 may alternatively be referred to as an "OIS driver", a "second driver IC", or an "OIS controller".

In addition, the camera device 200 may further include a cover plate 50A disposed on the second side portion 28B of the first housing 50 in order to cover the opening 55 in the first housing 50. The cover plate 50A may be coupled or attached to the outer side surface of the second side portion 28B of the first housing 50, and may prevent foreign substances from entering the first housing 50.

The OIS position sensor unit 240 detects the position of the OIS moving unit in the second direction and/or the third direction according to movement of the OIS moving unit, and outputs an output signal corresponding to the result of the detection. The OIS position sensor unit 240 may alternatively be referred to as a "second position sensor unit".

The OIS position sensor unit 240 may include a plurality of position sensors.

In an example, the OIS position sensor unit 240 may include first OIS position sensors 240A and 240B and a second OIS position sensor 240C.

The first OIS position sensors 240A and 240B may detect displacement (or tilt or tilt amount) of the OIS moving unit (e.g., optical member 40) with respect to the second axis (e.g., X-axis). In addition, in an example, the second OIS position sensor 240C may detect displacement (or tilt or tilt amount) of the OIS moving unit (e.g., optical member 40) with respect to the third axis (e.g., Y-axis).

The first OIS position sensors 240A and 240B may at least partially correspond to, face, or overlap the first OIS magnet 31 in the third direction, and may detect the magnetic field intensity of the first OIS magnet 31.

In an example, the first OIS position sensor may include a first sensor 240A disposed or mounted on the first circuit board 250A and a second sensor 240B disposed or mounted on the first board 250-1 of the second circuit board 240B. In an example, the first sensor 240A may be disposed in the cavity (or hole) in the first OIS coil unit 230A, and the second sensor 240B may be disposed in the cavity (or hole) in the second OIS coil unit 230B.

For example, each of the first sensor 240A and the second sensor 240B may be a Hall sensor including first and second input terminals and first and second output terminals.

The first and second input terminals of the first sensor 240A and the first and second input terminals of the second sensor 240B may be connected in parallel to each other, and the second driver 260 may supply a driving signal or power to the first and second input terminals of the first and second sensors 240A and 240B connected in parallel to each other.

The first and second output terminals of the first sensor 240A and the first and second output terminals of the second sensor 240B may be connected to each other in series, and a first output signal may be output from both ends of the first and second output terminals of the first and second sensors 240A and 240B connected to each other in series. The first output signal may be transmitted to the second driver 260.

At least a portion of the second OIS position sensor 240C may correspond to, face, or overlap the second OIS magnet 32 in the second direction, and may detect the magnetic field intensity of the second OIS magnet 32.

In an example, the second OIS position sensor 240C may include a third sensor 240C1 and a fourth sensor 240C2 disposed or mounted on the third circuit board 250C. The third sensor 240C1 and the fourth sensor 240C2 may face or overlap the third OIS magnet 32 in the second direction. In an example, the third sensor 240C1 and the fourth sensor 240C2 may be arranged so as to be spaced apart from each other in the third direction. In an example, the third sensor 240C1 and the fourth sensor 240C may be disposed in the cavity (or hole) in the third OIS coil unit 230C.

For example, each of the third sensor 240C1 and the fourth sensor 240C2 may be a Hall sensor including first and second input terminals and first and second output terminals.

The first and second input terminals of the third sensor 240C1 and the first and second input terminals of the fourth sensor 240B may be connected in parallel to each other, and the second driver 260 may supply a driving signal or power to the first and second input terminals of the third and fourth sensors 240C1 and 240C2 connected in parallel to each other.

The first and second output terminals of the third sensor 240C1 and the first and second output terminals of the fourth sensor 240C2 may be connected to each other in series, and a second output signal may be output from both ends of the first and second output terminals of the third and fourth sensors 240C1 and 240C2 connected to each other in series. The second output signal may be transmitted to the second driver 260.

The following description of first and second sensors 71A and 71B and a first circuit board 192 or the following description of third and fourth sensors 72A and 27B and a second circuit board 194 may be equally or similarly applied to the first and second sensors 240A and 240B, the third and fourth sensors 240C1 and 240C2, and the first board unit 250 in FIG. 5.

In another embodiment, the output terminals of the first and second sensors may be provided independently of each other without being connected to each other and may output independent output signals. In addition, the output terminals of the third and fourth sensors may be provided independently of each other without being connected to each other and may output independent output signals.

In still another embodiment, the first OIS position sensor may include one position sensor (e.g., a Hall sensor or a driver IC including a Hall sensor), and the second OIS position sensor may include one position sensor (e.g., a Hall sensor or a driver IC including a Hall sensor).

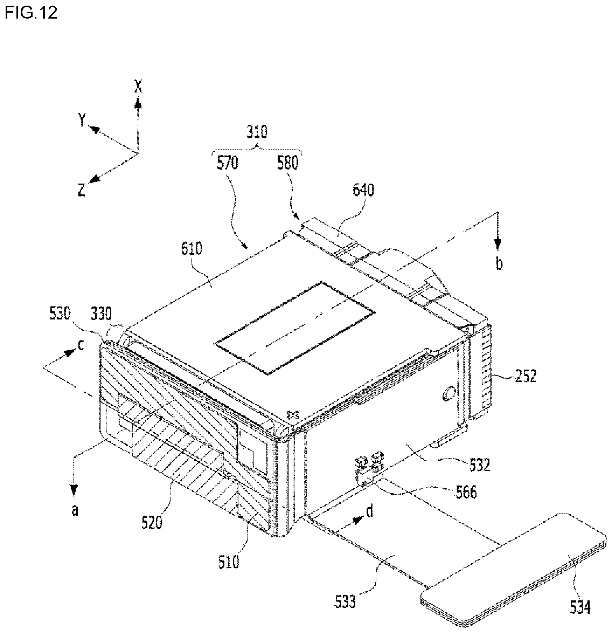

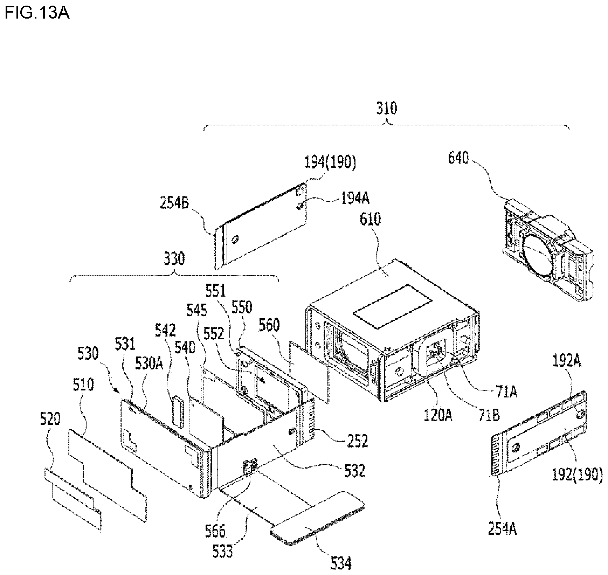

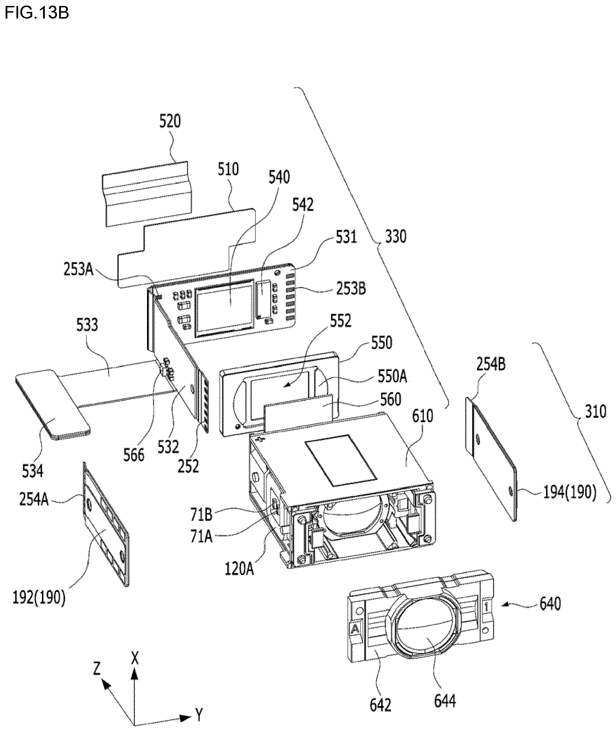

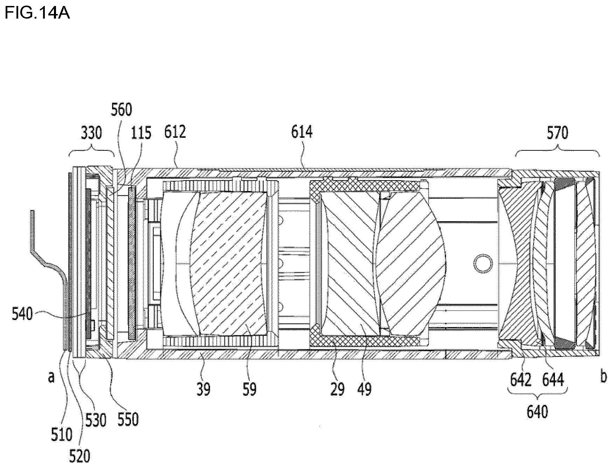

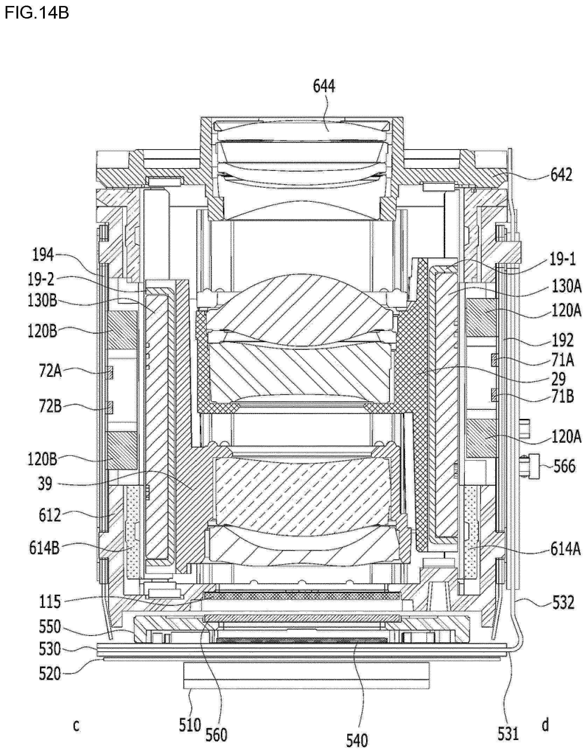

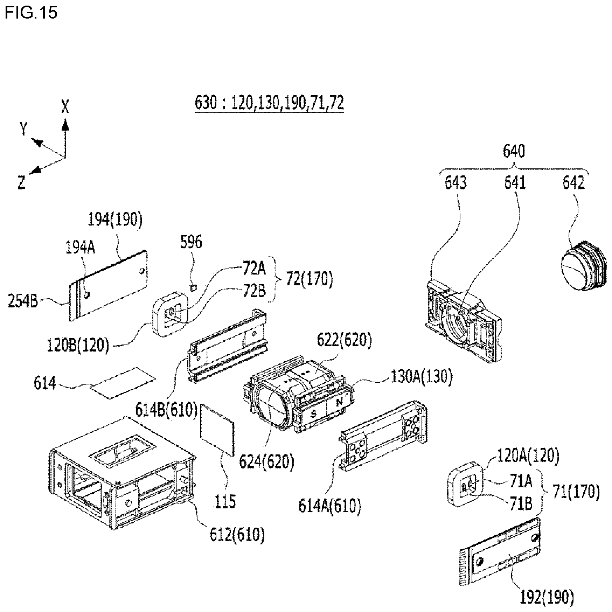

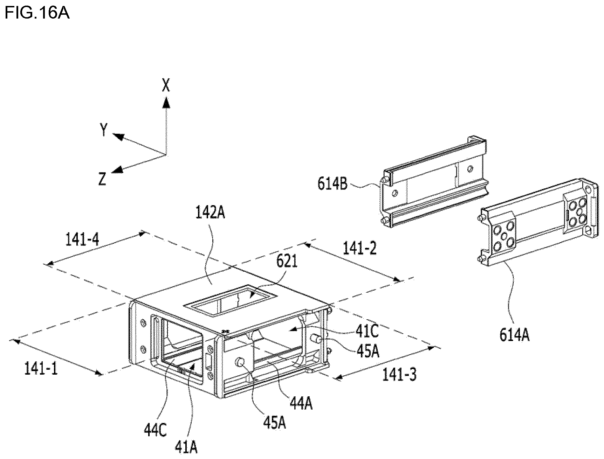

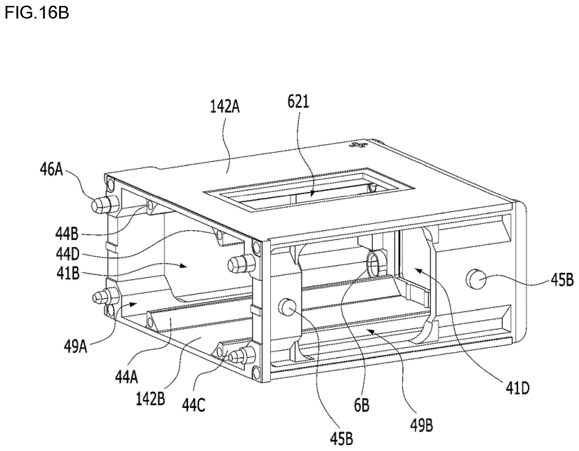

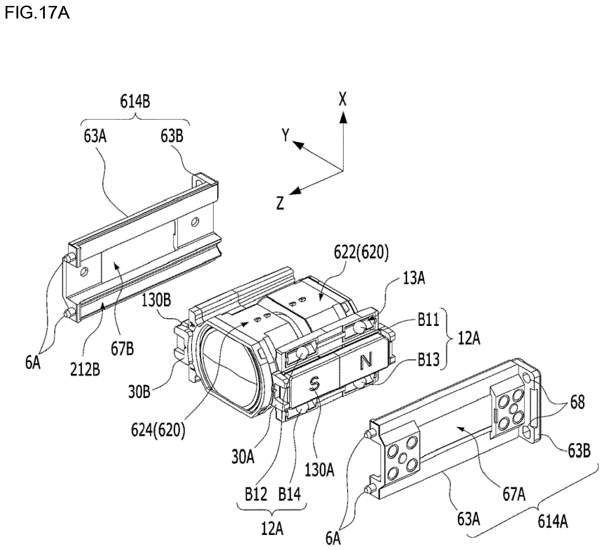

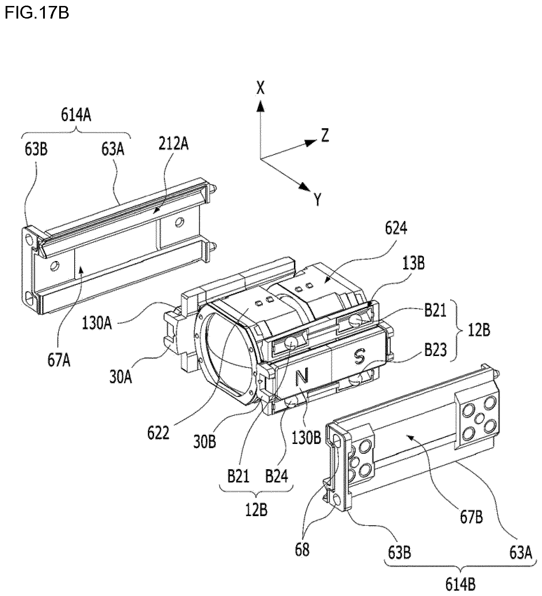

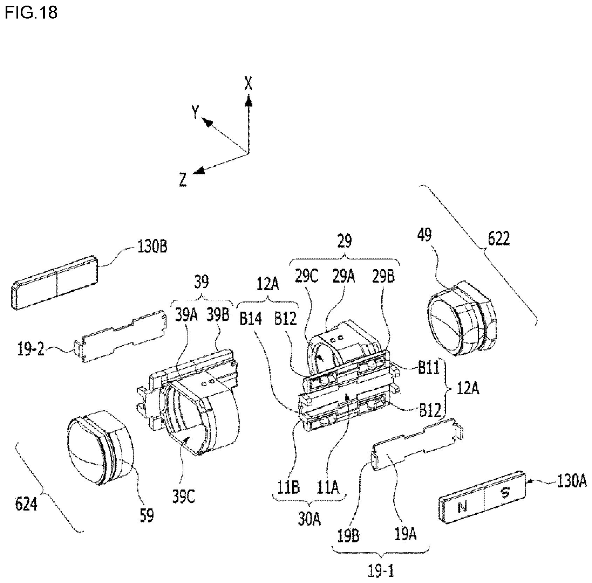

FIG. 12 is a perspective view of the first actuator 310 and the image sensing unit 330 according to the embodiment, FIG. 13A is a first exploded perspective view of the first actuator 310 and the image sensing unit 330 in FIG. 12, FIG. 13B is a second exploded perspective view of the first actuator 310 and the image sensing unit 330 in FIG. 12, FIG. 14A is a cross-sectional view of the first actuator 310 and the image sensing unit 330 taken along line ab in FIG. 12, FIG. 14B is a cross-sectional view of the first actuator 310 and the image sensing unit 330 taken along line cd in FIG. 12, FIG. 15 is an exploded perspective view of the first actuator 310, FIG. 16A is an exploded perspective view of a second housing 610, FIG. 16B is a perspective view of a body 612 of the second housing 610, FIG. 17A is a first perspective view of first and second guide parts 614A and 614B and a lens unit 620, FIG. 17B is a second perspective view of the first and second guide parts 614A and 614B and the lens unit 620, and FIG. 18 is an exploded perspective view of first and second magnets 130A and 130B and the lens unit 620.

Referring to FIGs. 12 to 18, the first actuator 310 may include a second housing 610, a lens unit 620 disposed in the second housing 610, and a first driving part 630 configured to move the lens unit 620 in the first direction (e.g., optical-axis direction or Z-axis direction).

The lens unit 620 may alternatively be referred to as a "lens assembly". In an example, the lens unit 620 may include a plurality of lens assemblies.

Although the lens unit 620 is illustrated in FIGs. 12 to 18 as including two lens assemblies 622 and 624, the disclosure is not limited thereto. In an example, the second lens assembly 622 and the third lens assembly 624 may be arranged in the first direction.

The first actuator 310 may further include a first lens assembly 640 disposed between the lens unit 620 and the second actuator 320. In an example, the first lens assembly 640 may be a fixed lens assembly that is fixed in position without moving in the optical-axis direction.

The first lens assembly 640 may include a first lens array 642 (or first lens group). In an example, the first lens assembly 640 may further include a lens barrel 641 coupled to the first lens array 642. In addition, the first lens assembly 640 may further include a third housing 643 coupled to the lens barrel 641. The third housing 643 may be disposed between the second housing 610 and the first housing 50, and may be coupled to at least one of the second housing 610 or the first housing 50.

In an example, at least one first coupling hole 643A may be formed in the front surface of the third housing 643 so as to be coupled to the at least one coupling protrusion 46A of the second housing 610. In addition, a second coupling hole may be formed in the rear surface of the third housing 643 so as to be coupled to the at least one coupling protrusion 52A of the first housing 50.

Although the first lens assembly 640 is described as being included in the first actuator 310, the disclosure is not limited thereto. The first lens assembly may not be included in the first actuator 310. In another embodiment, the first lens assembly 640 may be omitted.

In addition, in another embodiment, any one of 640, 622, and 624 may be referred to as a "first lens assembly", another one of 640, 622, and 624 may be referred to as a "second lens assembly", and the remaining one of 640, 622, and 624 may be referred to as a "third lens assembly".

In the embodiment, for example, the first lens assembly 640 may be a fixed lens group. For example, the second lens assembly 622 and the third lens assembly 624 may be moving lens groups.

In an example, the first lens assembly 640 may function as a focator that focuses parallel light to form an image at a specific position. In addition, the second lens assembly 622 may function as a variator that re-forms the image formed by the first lens assembly 640, which is a focator, at another position. Meanwhile, the second lens assembly 622 may greatly change in magnification due to a great change in a distance to a subject or an image distance. The second lens assembly 622, which is a variator, may play an important role in changing a focal length or magnification of an optical system. Meanwhile, the image point formed by the second lens assembly 6220, which is a variator, may slightly vary depending on the position of the second lens assembly.

In addition, the third lens assembly 624 may perform position compensation on the image formed by the variator. In an example, the third lens assembly 624 may function as a compensator that accurately forms the image point formed by the second lens assembly 622, which is a variator, on the pixel of the image sensor 540.

For example, the second lens assembly 622 may be a zoom lens assembly performing a zoom function, and the third lens assembly 624 may be a focus lens assembly performing a focusing function.

Referring to FIGs. 16A and 16B, the second housing 610 may be disposed between the first housing 50 and the image sensor unit 330 (e.g., sensor base 550). The second housing 610 may alternatively be referred to as a "base" or a "holder".

The second housing 610 may be disposed inside the cover member 300, and may have a polyhedral (e.g., rectangular parallelepiped) shape having a space defined therein in order to accommodate the lens unit 620 and the first driving part 630.

In an example, the second housing 610 may include a body 612, which includes an upper portion 142A (or upper plate), a lower portion 142B (or lower plate), and a plurality of side portions 141-1 to 141-4 disposed between the upper portion 142A and the lower portion 142B. The upper portion 142A of the second housing 610 may face the upper plate 301 of the cover member 300, and the side portions 141-1 to 141-4 may face the side plate 302 of the cover member 300.

The side portions 141-1 to 141-4 may alternatively be referred to as "side plates" or "sidewalls". In an example, the first side portion 141-1 and the second side portion 141-2 may face each other or may be located opposite each other in the first direction, and the third side portion 141-3 and the fourth side portion 141-3 may face each other or may be located opposite each other in the third direction.

A first opening 41A (or first hole) may be formed in the first side portion 141-1 of the second housing 610 in order to expose one end of the lens unit 620, and a second opening 41B (or second hole) may be formed in the second side portion 141-2 of the second housing 610 in order to expose the other end of the lens unit 620.

In addition, a third opening 41C (or third hole) in which the first coil 120A is disposed or seated may be formed in the third side portion 141-3 of the second housing 610, and a fourth opening 41C (or third hole) in which the second coil 120B is disposed or seated may be formed in the fourth side portion 141-4 of the second housing 610. Each of the third and fourth openings 41C and 41D may have a through-hole shape, without being limited thereto. Each of the third and fourth openings may have a recess shape.

At least one first coupling protrusion 45A may be formed on the third side portion 141-3 of the second housing 610 so as to be coupled to the first circuit board 192 of the second board unit 190. In an example, the at least one first coupling protrusion 45A may protrude from the outer side surface of the third side portion 141-3.

At least one second coupling protrusion 45B may be formed on the fourth side portion 141-1 of the second housing 610 so as to be coupled to the second circuit board 194 of the second board unit 190. In an example, the at least one second coupling protrusion 45B may protrude from the outer side surface of the fourth side portion 141-4. In addition, at least one third coupling protrusion 46A may be formed on the second side portion 141-2 of the second housing 610.

The second housing 610 may include a first guide part 614A and a second guide part 614B. The first guide part 614A may support and guide the second lens assembly 622 when the lens unit 620 moves for zooming operation. The second guide part 614B may support and guide the third lens assembly 624 when the lens unit 620 moves for zooming operation.

The first guide part 614A may be disposed between the lens unit 620 and the third side portion 141-3, and the second guide part 614b may be disposed between the lens unit 620 and the fourth side portion 141-4.

In an example, the first guide part 614A may be coupled to the third side portion 141-3 of the second housing 610, and the second guide part 614B may be coupled to the fourth side portion 141-4 of the second housing 610.

Referring to FIGs. 17A and 17B, the first guide part 614A may include at least one first guide groove 212A. The second guide part 614B may include at least one second guide groove 212B. Here, the guide groove may alternatively be referred to as a "rail" or a "groove".

In an example, each of the first guide part 614A and the second guide part 614B may include a body 63A and a protruding portion 63B protruding from the body 63A.

In an example, the first guide groove 212A may be formed in the inner side surface of the body 63A of the first guide part 614A, and the second guide groove 212B may be formed in the inner side surface of the body 63A of the second guide part 614B. In this case, the inner side surface of the body 63A of each of the first and second guide parts 614A and 614B may be a surface facing the lens unit 620.

In FIGs. 17A and 17B, one first guide groove 212A is formed in the lower side of the inner side surface of the body 63A of the first guide part 614A, and one second guide groove 212B is formed in the upper side of the inner side surface of the body 63A of the second guide part 614B. However, the disclosure is not limited thereto. In another embodiment, the guide groove may be formed in at least one of the upper side or the lower side of the inner side surface of the body of each of the first and second guide grooves.

Each of the first and second guide grooves 212A and 212B may be formed continuously from the front end of the inner side surface of the body 64A to the rear end thereof.

The protruding portion 63B of each of the first guide part 614A and the second guide part 614B may extend in a direction (e.g., third direction) perpendicular to the direction in which the first and second guide grooves extend (e.g., first direction). In an example, the protruding portion 63B of the first guide part 614A and the protruding portion 63B of the second guide part 614B may protrude in opposite directions.

In an example, the protruding portion 63B may be formed on the rear surface or rear end of each of the first guide part 614A and the second guide part 614B.

At least one hole 68 may be formed in the protruding portion 63B of each of the first and second guide parts 614A and 614B so as to be coupled to the rear end of the body 612 of the second housing 610. In an example, the hole 68 in the protruding portion 63B may be coupled to the coupling protrusion 46A of the body 612 of the second housing 610. In an example, the coupling protrusion 46A may be coupled to the first coupling hole 643A in the third housing 643 through the hole 68 in the protruding portion 63B.

At least one coupling protrusion 6A may be formed on the front surface or front end of each of the first guide part 614A and the second guide part 614B so as to be coupled to the body 612 of the second housing 610. In an example, a coupling hole 6B may be formed in the inner surface of the body 612 of the second housing 610 so as to be coupled to the coupling protrusion 6A of each of the first and second guide parts 614A and 614B (refer to FIG. 16B).

Referring to FIG. 16B, guide protrusions 44A to 44D may be formed on the inner surface of the body 612 of the second housing 610 in order to guide the first and second guide parts 614A and 614B. In an example, the first guide protrusion 44A may be disposed on the inner surface of the lower portion 142B of the second housing 610, and the second guide protrusion 44B may be disposed on the inner surface of the upper portion 142A of the second housing 610 so as to correspond to the first guide protrusion 44A in the second direction. The first guide part 614A may be disposed in a space 49A between the first and second guide protrusions 44A and 44B and the third side portion 141-3 of the second housing 610.

In addition, in an example, the third guide protrusion 44C may be disposed on the inner surface of the lower portion 142B of the second housing 610, and the fourth guide protrusion 44D may be disposed on the inner surface of the upper portion 142A of the second housing 610 so as to correspond to the third guide protrusion 44C in the second direction. The second guide part 614B may be disposed in a space 49B between the third and fourth guide protrusions 44C and 44D and the fourth side portion 141-4 of the second housing 610.

Due to the first to fourth guide protrusions 44A to 44D, the first and second guide parts 614A and 614B may be stably coupled to the body of the second housing 610, and the first and the second guide parts 614A and 614B may be prevented from deviating from the original positions thereof or colliding with the lens unit 620 due to impact.

The first guide part 614A may include a first opening 67A (or hole) formed therein so as to correspond to, face, or overlap the first magnet 130A. In an example, the first opening 67A may be located between the first magnet 130A and the first coil 120A.

The second guide part 614B may include a second opening 67B (or hole) formed therein so as to correspond to, face, or overlap the second magnet 130B. In an example, the first opening 67B may be located between the second magnet 130B and the second coil 120B. The electromagnetic force generated by interaction between the first magnet 130A and the first coil 120A and the electromagnetic force generated by interaction between the second magnet 130B and the second coil 120B may be increased by the first and second openings 67A and 67B.

In FIGs. 16A and 16B, the first and second guide parts 614A and 614B and the body 612 of the second housing 610 are formed as separate injection-molded products, and the separate injection-molded products are coupled to each other. However, the disclosure is not limited thereto. In another embodiment, the first and second guide parts and the body of the second housing may be formed as an integrated injection-molded product.

An opening 621 may be formed in the upper portion 142A of the body 612 of the second housing 610 in order to expose a portion of the lens unit 620, and the second housing 610 may further include a cover 614 covering the opening 621. In another embodiment, the opening 621 may not be formed, and the cover 614 may be omitted.

The lens unit 620 may include a second lens assembly 622 configured to move along the first guide part 614A and a third lens assembly 624 configured to move along the second guide part 614B.

Referring to FIGs. 17A, 17B, and 18, the second lens assembly 622 may include a first lens holder 29 and a second lens array 49 (or second lens group) disposed in the first lens holder 29. The lens holder may alternatively be referred to as a "bobbin".

The second lens array 49 may include a single lens or a plurality of lenses.

The first lens holder 29 may include a first lens barrel 29A in which the second lens array 49 is disposed and a first support part 29B coupled to the first lens barrel 29A.

In an example, the first lens barrel 29A may have a barrel shape, and may include an opening 29C (or hole) formed therein, through which the second lens array 49 is coupled thereto.

The first side surface (or first surface) of the first support part 29B may be coupled to the first lens barrel 29A. The first support part 29B may correspond to, face, or overlap the body 63A of the first guide part 614A in the third direction.

A first seating portion 30A in which the first magnet 130A is disposed or seated may be formed in the second side surface (or second surface) of the first support part 29B. The second side surface (or second surface) of the first support part 29B may be a surface facing the first guide part 614A, and may be a surface opposite the first side surface (or first surface) of the first support part 29B.

In an example, the first seating portion 30A may include a first seating surface 11A formed in one region (e.g., central region) of the second side surface (or second surface) of the first support part 29B and at least one first support protrusion 11B protruding from the first seating surface 11A. In FIG. 18, the first seating portion 30A may include four first support protrusions formed on four corners of the second side surface of the first support part 29B, and the four first support protrusions may support the first magnet 130A. In another embodiment, the number of first support protrusions of the first seating portion may be one or two or more.

The first support part 29B may include at least one first groove 13A (or first guide groove) formed therein in order to accommodate at least a portion of a first rolling member 12A.

In an example, the at least one first groove 13A may correspond to, face, or overlap the at least one first guide groove 212A in the first guide part 614A.

In an example, two first grooves may be formed above the seating surface 11A of the first seating portion 30A so as to be spaced apart from each other, and two first grooves may be formed below the seating surface 11B so as to be spaced apart from each other. In another embodiment, the two grooves formed above or below the seating surface 11B may be connected to each other to form one groove. In an example, the number of grooves may be identical to the number of balls B11 to B14. However, the disclosure is not limited thereto.

The third lens assembly 624 may include a second lens holder 39 and a third lens array 59 (or third lens group) disposed in the second lens holder 39.

The third lens array 59 may include a single lens or a plurality of lenses.

The plurality of lenses included in each of the second and third lens arrays 49 and 59 may be sequentially disposed or arranged in the first direction. In an example, each of the second and third lens arrays 49 and 59 may include various types of optical lenses. In an example, each of the second and third lens arrays 49 and 59 may include at least one of a front lens having positive power or a rear lens having negative power.

A distance between the second lens group and the third lens group in the optical-axis direction may be changed by the first driving part 630.

The second lens holder 39 may include a second lens barrel 39A in which the third lens array 59 is disposed and a second support part 39B coupled to the second lens barrel 39A.

In an example, the second lens barrel 39A may have a barrel shape, and may include an opening 39C (or hole) formed therein, through which the second lens array 49 is coupled thereto.

The first side surface (or first surface) of the second support part 39B may be coupled to the second lens barrel 39A. The second support part 39B may correspond to, face, or overlap the body 63A of the second guide part 614B in the third direction.

A second seating portion 30B in which the second magnet 130B is disposed or seated may be formed in the second side surface (or second surface) of the second support part 39B. The second side surface (or second surface) of the second support part 39B may be a surface facing the second guide part 614B, and may be a surface opposite the first side surface (or first surface) of the second support part 39B.

In an example, the second seating portion 30B may include a second seating surface formed in one region (e.g., central region) of the second side surface (or second surface) of the second support part 39B and at least one second support protrusion protruding from the second seating surface. The description of the first seating surface 11A and the first support protrusion 11B of the first support part 29B may be equally or similarly applied to the second seating surface and the second support protrusion of the second support part 29B.

The second support part 39B may include at least one second groove 13B (or second guide groove) formed therein in order to accommodate at least a portion of a second rolling member 12B.

In an example, the at least one second groove 13B may correspond to, face, or overlap the at least one second guide groove 212B in the second guide part 614B. The description of the first groove 13A in the first support part 30A may be equally or similarly applied to the second groove 13B in the second support part 30B.

Each of the first and second guide grooves 212A and 212B and the first and second grooves 13A and 13B may have a V or U shape. However, the disclosure is not limited thereto. Each groove may be shaped so as to be in contact at two or more points thereof with the balls B11 to B14 and B21 and B24. When the second and third lens assemblies 622 and 624 move, decentering or tilt thereof may be prevented by the first and second guide grooves 212A and 212B and the first and second grooves 13A and 13B. Accordingly, the plurality of lens arrays may be well aligned with each other, whereby the occurrence of change in angle of view or defocusing may be prevented, with a result that the image quality or the resolution of the camera device 200 may be greatly improved.

The first actuator 310 may further include rolling members 12A and 12B disposed between the second housing 610 and the lens unit 620. In an example, the rolling members 12A and 12B may be disposed between the guide parts 614A and 614B of the second housing 610 and the grooves 13A and 13B in the support parts 39A and 39B of the lens unit 620.

The rolling member may alternatively be referred to as a "ball member", a "ball", or a "ball bearing". In an example, each of the rolling members 12A and 12B may include at least one ball.

The rolling members 12A and 12B may be in contact with the second housing 610 and the lens unit 620, and may support the lens unit 620. When the lens unit 620 moves in the first direction, the rolling members 12A and 12B may perform rolling motion between the lens unit 620 and the second housing 610, thereby reducing friction between the lens unit and the second housing 610. That is, due to the rolling motion of the rolling members 12A and 12B, the lens unit 620 may slide in the first direction along the first and second guide parts 614A and 614B in a state of contacting the rolling members 12A and 12B.

In an example, the rolling members may include a first rolling member 12A and a second rolling member 12B. The first rolling member 12A may be disposed between the first guide part 614A of the second housing 610 and the second lens assembly 622 (e.g., first support part 29B). The second rolling member 12B may be disposed between the second guide part 614B of the second housing 610 and the third lens assembly 624 (e.g., second support part 39B).

The first rolling member 12A may include a plurality of balls B11 to B14, and the second rolling member 12B may include a plurality of balls B21 to B24. Each of the balls B11 to B14 and B221 to B24 may be made of metal, plastic, or resin. However, the disclosure is not limited thereto. Each of the balls B11 to B14 and B221 to B24 may have a circular shape, and may have a diameter large enough to support movement of the lens unit 620.

Next, the first driving part 630 will be described.

The first driving part 630 may move the second lens assembly 622 in the first direction, and may move the third lens assembly 624 in the first direction.

In an example, the first driving part 630 may move at least one lens group, e.g., the second lens group or the third lens group, in the first direction or the optical-axis direction.

The first driving part 630 may include a magnet 130 disposed in the lens unit 620 and a coil 120 disposed in the second housing 610.

In an example, the magnet 130 may include a first magnet 130A disposed on the second lens assembly 622 and a second magnet 130B disposed on the third lens assembly 624.

In an example, the first magnet 130A may be disposed on the first lens holder 29 of the second lens assembly 622, and the second magnet 130B may be disposed on the second lens holder 39 of the third lens assembly 624.

In an example, the first magnet 130A may be disposed in the first seating portion 30A of the first support part 29B of the first lens holder 29, and the second magnet 130B may be disposed in the second seating portion 30B of the second support part 39B of the second lens holder 39.

For example, each of the first and second magnets 130A and 130B may be a monopolar-magnetized magnet including one N pole and one S pole. In another embodiment, each of the first and second magnets 130A and 130B may be a bipolar-magnetized magnet including two N poles and two S poles.

The coil 120 may include a first coil 120A disposed on the third side portion 142-3 of the second housing 610 so as to correspond to, face, or overlap the first magnet 130A in the third direction and a second coil 120B disposed on the fourth side portion 142-4 of the second housing 610 so as to correspond to, face, or overlap the second magnet 130B in the third direction.

For example, each of the first coil 120A and the second coil 120B may have a closed curve or ring shape including a cavity (or hole). For example, each of the first coil 120A and the second coil 120B may be formed in a shape of a coil ring wound in the clockwise or counterclockwise direction with respect to (or about) the third axis parallel to the third direction.

In an example, the N pole and the S pole of the first magnet 130A may be disposed so as to face the first coil 120A, and the N pole and the S pole of the second magnet 130B may be disposed so as to face the second coil 120B. In an example, the cavity or the hole in each of the first and second coils 120A and 120B may face the first and second magnets 130A and 130B in the third direction.

The first driving signal (e.g., first current) may be applied to the first coil 120A, and the second driving signal (e.g., second current) may be applied to the second coil 120B.

The first lens assembly 622 may be moved in the first direction by the electromagnetic force generated by interaction between the first coil 120A and the first magnet 130A. In addition, the second lens assembly 624 may be moved in the first direction by the electromagnetic force generated by interaction between the second coil 120B and the second magnet 130B.

Movement of each of the first lens assembly 622 and the second lens assembly 624 may be controlled by controlling the first driving signal and the second driving signal. As the movement of each of the first lens assembly 622 and the second lens assembly 624 is controlled, the position (or displacement) of each of the first lens assembly 622 and the second lens assembly 624 may be controlled, and accordingly, zooming and autofocus of the camera device 200 may be performed.

Referring to FIG. 18, the first driving part 630 may further include a first yoke 19-1 disposed on the first lens holder 29 and a second yoke 19-2 disposed on the second lens holder 39. The first yoke 19-1 may increase the electromagnetic force generated by interaction between the first magnet 130A and the first coil 120A, and the second yoke 19-2 may increase the electromagnetic force generated by interaction between the second magnet 130B and the second coil 120B. The first and second yokes 19-1 and 19-2 may improve driving force for moving the lens unit 620, thereby reducing power consumption.

In an example, the first yoke 19-1 may be disposed between the first magnet 130A and the first lens holder 29, and the second yoke 19-2 may be disposed between the second magnet 130B and the second lens holder 39. In an example, the first yoke 19-1 may be disposed in the first seating portion 30A of the first support part 29B, and the second yoke 19-2 may be disposed in the second seating portion 30B of the second support part 39B.

In an example, the first yoke 19-1 may include a first portion 19A disposed on the first seating surface 11A so as to face the first magnet 130A in the third direction and a second portion 19B extending from at least one of one end or the other end of the first portion 19A. In an example, the second portion 19B may include a 2-1^{st} portion supporting one end of the first magnet 130A and a 2-2^{nd} portion supporting the other end of the first magnet 130A.

The first driving part 630 may further include a second board unit 190 conductively connected to the first coil 120A and the second coil 120B. For example, the second board unit 190 may be a printed circuit board.

The second board unit 190 may be disposed on the second housing 610. In an example, the second board unit 190 may include a first circuit board 192 disposed on the third side portion 142-3 of the second housing 610 and a second circuit board 194 disposed on the fourth side portion 142-4 of the second housing 610. In an example, the first circuit board 192 may include at least one hole 192A formed therein so as to be coupled to the at least one first coupling protrusion 45A of the second housing 610, and the second circuit board 194 may include at least one hole 194A formed therein so as to be coupled to the at least one second coupling protrusion 45B of the second housing 610.

The first coil 120A may be disposed or mounted on the first surface of the first circuit board 192. In this case, the first surface of the first circuit board 192 may be a surface facing the third side portion 142-3 of the second housing 610 in the third direction. The second coil 120B may be disposed or mounted on the first surface of the second circuit board 194. In this case, the first surface of the second circuit board 194 may be a surface facing the fourth side portion 142-4 of the second housing 610 in the third direction.

The first circuit board 192 may be conductively connected to the first coil 120A. In an example, two pads, which are conductively connected to the first coil 120A, may be formed on the first surface of the first circuit board 192. In addition, the first circuit board 192 may include a plurality of terminals 254A. In an example, the plurality of terminals 254A may be formed on the second surface of the first circuit board 192. In an example, the second surface of the first circuit board 192 may be a surface opposite the first surface of the first circuit board 192. In an example, two terminals among the plurality of terminals 254A may be conductively connected to the two pads of the first circuit board 192 connected to the first coil 120A, and may be conductively connected to the first coil 120A.

The second circuit board 194 may be conductively connected to the second coil 120B. In an example, two pads, which are conductively connected to the second coil 120B, may be formed on the first surface of the second circuit board 194. In addition, the second circuit board 194 may include a plurality of terminals 254B.

In an example, the plurality of terminals 254b may be formed on the second surface of the second circuit board 194. In an example, the second surface of the second circuit board 194 may be a surface opposite the first surface of the circuit board 192. Although the terminals 254b are not illustrated in detail in FIG. 15, the terminals 254B may be formed on the second surface of the second circuit board 194 in the same form as the terminals 254a of the first circuit board 192.

In an example, two terminals among the plurality of terminals 254B may be conductively connected to the two pads of the second circuit board 194 connected to the second coil 120B, and may be conductively connected to the second coil 120B.

The second driving part 70 may include a first position sensor unit 170 in order to perform feedback driving for accurate zooming and AF operation.

The first position sensor unit 170 may include a first position sensing part 71 configured to detect the position or displacement of the second lens assembly 622 and a second position sensing part 72 configured to detect the position or displacement of the third lens assembly 624.

In an example, the first position sensing part 71 may be disposed or mounted on the first circuit board 192, and may be conductively connected to the first circuit board 192. The second position sensing part 72 may be disposed or mounted on the second circuit board 194, and may be conductively connected to the second circuit board 184.

In an example, the first position sensing part 71 may be disposed or mounted on the first surface of the first circuit board 192, and the second position sensing part 72 may be disposed or mounted on the first surface of the second circuit board 194. In an example, the first position sensing part 71 may be disposed in the cavity in the first coil 120A, and the second position sensing part 72 may be disposed in the cavity in the second coil 120B.

In an example, the first position sensing part 71 may face or overlap the first magnet 130A in the third direction. In an example, the first position sensing part 71 may be disposed opposite the first magnet 130A.

The first position sensing part may detect the magnetic field intensity of the first magnet 130A. In an example, the first position sensing part 71 may detect movement of the first magnet 130A in the optical-axis direction.

The second position sensing part 72 may face or overlap the second magnet 130B in the third direction. In an example, the second position sensing part 72 may be disposed opposite the second magnet 130B.

The second position sensing part may detect the magnetic field intensity of the second magnet 130B. In an example, the second position sensing part 72 may detect movement of the second magnet 130B in the optical-axis direction.

In an example, the first position sensing part 71 may include a first sensor 71A and a second sensor 71B. For example, each of the first and second sensors 71A and 71B may be a Hall sensor. In an example, the first sensor 71A and the second sensor 71B may be arranged so as to be spaced apart from each other in the first direction.

In an example, the second position sensing part 72 may include a third sensor 72A and a fourth sensor 72B. For example, each of the third and fourth sensors 72A and 72B may be a Hall sensor. In an example, the third sensor 72A and the fourth sensor 72B may be arranged so as to be spaced apart from each other in the first direction.

In FIG. 15, each of the first position sensing part 71 and the second position sensing part 72 includes two sensors. However, in another embodiment, each of the first position sensing part and the second position sensing part may include one sensor. In this case, the sensor may be a Hall sensor or a driver IC including a Hall sensor.

The camera device 200 may include a memory 596 disposed on the second board unit 190. For example, the memory 596 may be a non-volatile memory, such as electrically erasable PROM (EEPROM) .

In an example, the memory 596 may be disposed or mounted on the second circuit board 194, and may be conductively connected to the second circuit board 194.

After the actuators 610 and 620 are completely assembled, module process inspection is performed in order to inspect the driving characteristics of the actuators. In this case, the driving characteristics inspection may include Hall calibration, lens inspection, or an active alignment process for actively aligning the image sensor and the lens. For example, the lens inspection may include inspection of checking the assembled state of lenses and the resolution while moving the lens assembly.

A storage device is needed to store related information and data for inspection of the driving characteristics. Since a first driver 542 is not provided in the camera device in the step of performing module process inspection on the actuators 610 and 620, the memory 596 may store values or data necessary to inspect the driving characteristics of the actuators 610 and 620.

For example, the memory 596 may store data necessary for driving of the driving part. In this case, the driving part may include at least one of the first driving part 630 or the second driving part 70. In an example, the memory 596 may store at least one of data of the first position sensing part 71 corresponding to the movement range of the second lens group or data of the second position sensing part 72 corresponding to the movement range of the third lens group.

In this case, the data of the first position sensing part 71 may be data (or reference code value) related to the output of the first position sensing part 71 corresponding to the movement range of the second lens group acquired through calibration. In addition, the data of the second position sensing part 72 may be data (or reference code value) related to the output of the second position sensing part 72 corresponding to the movement range of the third lens group acquired through calibration.

In addition, the memory 596 may store data of the first OIS position sensors 240A and 240B corresponding to the second-axis (X-axis) tilt range of the OIS moving unit. In this case, the data of the first OIS position sensors 240A and 240B may be a reference code value related to the output of the first OIS position sensors 240A and 240B corresponding to the second-axis (X-axis) tilt range of the OIS moving unit acquired through calibration.

In addition, the memory 596 may store data of the second OIS position sensor 240C corresponding to the third-axis (Y-axis) tilt range of the OIS moving unit. In this case, the data of the second OIS position sensor 240C may be a reference code value related to the output of the second OIS position sensor 240C corresponding to the third-axis (Y-axis) tilt range of the OIS moving unit acquired through calibration.

The first driver 542 may be provided in the camera device after completion of the active alignment process. Therefore, in the embodiment, since the memory storing values necessary to inspect the driving characteristics of the actuators 610 and 620 is mounted, disposed, or provided in the actuators, module process inspection may be easily performed on the actuators included in the camera device. The memory 596 may remain in the product after completion of module process inspection.

In another embodiment, the memory 596 may be eliminated from the final product before product shipment.

In an example, the memory 596 may be conductively connected to at least one of the plurality of terminals 254B of the second circuit board 194.

The camera device 200 may further include a temperature sensor 566 disposed on the second board unit 190. In an example, the temperature sensor 566 may measure temperature of the camera device 200 or ambient temperature of the camera device 200, and may output temperature information corresponding to the result of the measurement.

Referring to FIG. 15, the first actuator 310 may further include a glass 115 disposed in front of the lens unit 620. In an example, the glass 115 may be disposed in the second housing 610 so as to cover the first opening 41A in the second housing 610, and may protect the lens unit 620 and may prevent foreign substances from entering the second housing.

The image sensing unit 330 may include an image sensor 540 configured to receive and detect light that has passed through the optical member 40 of the second actuator 320 and the lens assemblies 640, 622, and 624 of the first actuator 310 and to convert the detected light into an electrical signal.

In an example, the image sensor 540 may include an imaging area for detecting light. Here, the imaging area may alternatively be referred to as an effective area, a light-receiving area, or an active area. In an example, the imaging area may include a plurality of pixels on which an image is formed.

The image sensing unit 330 may include a third board unit 530 conductively connected to the image sensor 540. The third board unit 530 may be disposed so as to be spaced apart from the second housing 610. For example, the third board unit 530 may alternatively be referred to as a sensor board unit.

With respect to the second housing 610, the first board unit 250 may be disposed in front of the second housing 610, the third board unit 530 may be disposed behind the second housing 610, and the second board unit 190 may be disposed on the side of the second housing 610.

In an example, the second board unit 190 may be disposed on a first side (e.g., left or right) of the second housing 610. In an example, the first circuit board 192 may be disposed on the first side of the second housing 610, and the second circuit board 192 may be disposed on a third side of the second housing 610. The third board unit 530 may be disposed on a second side (e.g., rear side) of the second housing 610. In addition, the first board unit 250 may be disposed on a fourth side of the second housing 610. The first side and the third side may be located opposite each other, and the second side and the fourth side may be located opposite each other.

The third board unit 530 may include a first board 531, on which the image sensor 540 is disposed or mounted. In an example, the image sensor 540 may be disposed on a first surface of the first board 531, and the first surface of the first board 531 may be a surface facing the first actuator 310 or the lens unit 620. The first board 531 may alternatively be referred to as a "sensor board".

The first board 531 may include a plurality of first terminals 253A and a plurality of second terminals 253B. In an example, the plurality of first terminals 253A may be disposed between the image sensor 540 and a first end portion of the first board 531, and the plurality of second terminals 253B may be disposed between the image sensor 540 and a second end portion of the first board 531. The first end portion may be located opposite the second end portion.

In an example, the plurality of first terminals 253A may correspond to, face, or overlap the plurality of terminals 254A of the first circuit board 192 in the first direction, and may be conductively connected to the plurality of terminals 254A of the first circuit board 192 by means of solder or a conductive adhesive.

In an example, in order to facilitate soldering, an end portion (or first end) or a terminal portion of the first circuit board 192, on which the plurality of terminals 254A is formed, may include a bent or curved portion. In an example, the terminal portion of the first circuit board 192, on which the plurality of terminals 254A is formed, may be an inclined portion that is curved or bent inwardly.

In an example, the plurality of second terminals 253B may correspond to, face, or overlap the plurality of terminals 254B of the second circuit board 194 in the first direction, and may be conductively connected to the plurality of terminals 254B of the second circuit board 194 by means of solder or a conductive adhesive.

In an example, in order to facilitate soldering, an end portion (or first end) or a terminal portion of the second circuit board 194, on which the plurality of terminals 254B is formed, may include a bent or curved portion. In an example, the terminal portion of the second circuit board 194, on which the plurality of terminals 254B is formed, may be an inclined portion that is curved or bent inwardly.

The third board unit 530 may include a second board 532, which is connected to the first board 531 and extends in the first direction. The second board 532 may include a plurality of terminals 252. The first board unit 250 may be conductively connected to the third board unit 530. In an example, the plurality of terminals 252 of the second board 532 may be conductively connected to the plurality of terminals 251 of the first circuit board 250A of the first board unit 250 by means of a conductive adhesive or solder.

In an example, referring to FIGs. 12, 13A, and 13B, the second board 532 may be disposed so as to face the first circuit board 192 in the third direction, and may be disposed on the second surface of the first circuit board 192. In an example, the third board unit 530 may include a bent portion between the first board 532 and the second board 532.

The third board unit 530 may include a connector 534 including a port or a socket in order to be conductively connected to an external device. In an example, the port or the socket may be formed on at least one of the upper portion (upper surface) or lower portion (lower surface) of the connector.

In addition, the third board unit 530 may further include a third board 533 connecting the second board 532 to the connector 534. The third board unit 530 may be a printed circuit board. For example, each of the first to third boards 531, 532, and 533 may include at least one of a rigid substrate or a flexible substrate.

In another embodiment, at least one of the second board 532 or the connector 534 may be omitted, and the port or the socket may be formed on the first board. In still another embodiment, the port or the socket may be formed on at least one of the first to third boards.

The image sensing unit 330 may further include a first driver 542 disposed on the third board unit 530. The first driver 542 may be disposed or mounted on the first board 531. In an example, the first driver 542 may be disposed between the image sensor 540 and the plurality of second terminals 253B. Each of the first driver 542 and the second driver 260 may alternatively be referred to as a "controller". In addition, in an example, each of the first and second drivers 542 and 260 may include a storage unit or a memory.

The third board unit 530 may be provided with a circuit element, a passive element, an active element, or a circuit pattern.

The image sensing unit 330 may further include a sensor base 550 disposed between the third board unit 530 and the first actuator and a filter 560 disposed on the sensor base 550. In an example, the sensor base 550 may be disposed between the first board 531 of the third board unit 530 and the second housing 610.

The sensor base 550 may be coupled, attached, or fixed to the first surface of the first board 531 by means of an adhesive 545. The lower portion or lower surface of the sensor base 550 may be coupled to the first surface of the first board 531 by means of the adhesive 545.

In an example, at least one coupling protrusion 551 may be formed on the lower surface or lower end of the sensor base 550, and at least one hole 530A may be formed in the first board 531 so as to be coupled to the at least one coupling protrusion 551.

The sensor base 550 may include a seating portion 550A in which the filter 610 is disposed or seated. In an example, the seating portion 550A may be formed in the first surface of the sensor base 550. The first surface of the sensor base 550 may be a surface facing the second housing 610 in the first direction. In an example, the seating portion 500A may be formed in a shape of a recess, a cavity, or a hole depressed in the first surface of the sensor base 550. However, the disclosure is not limited thereto. In another embodiment, the seating portion may be formed in a shape of a protruding portion protruding from the first surface of the sensor base 550. The sensor base 550 may alternatively be referred to as a "holder".

The filter 560 may be disposed in the seating portion 550A of the sensor base 550. In an example, the seating portion 550A of the sensor base 550 may include an inner side surface and a bottom surface, and the filter 560 may be disposed on the bottom surface of the seating portion 500A of the sensor base 550.

The sensor base 550 may include an opening 552 (or through-hole) formed therein to allow light that has passed through the filter 560 to be introduced into the image sensor 540. The opening 552 may correspond to, face, or overlap the image sensor 550 (e.g., imaging area). In an example, the opening 552 may be formed in the bottom surface of the seating portion 550A. The area of the opening 552 may be smaller than the area of the upper surface or lower surface of the filter 560. However, the disclosure is not limited thereto.

The filter 560 may serve to block introduction of light within a specific frequency band, among the light that has passed through the lens unit 620, into the image sensor 540. The filter 560 may be, for example, an infrared cut filter, without being limited thereto. In an example, the filter 560 may be disposed parallel to an xy-plane perpendicular to the first direction. In an example, the filter 560 may be attached to the bottom surface of the seating portion 550A of the sensor base 550 by means of an adhesive member (not shown) such as UV epoxy. The filter 560 and the image sensor 540 may be spaced apart from each other so as to face each other in the first direction.

The image sensing unit 330 may further include a reinforcing member 510 disposed on the third board unit 530. In an example, the reinforcing member 510 may be disposed on the second surface of the first board 531, and the second surface of the first board 531 may be a surface opposite the first surface of the first board 531.

The reinforcing member 510 may be formed of a conductive material having high thermal conductivity, for example, a metallic material. For example, the reinforcing member 510 may be formed of SUS, aluminum, etc., without being limited thereto.

In addition, the reinforcing member 510 may be conductively connected to a ground terminal of the third board unit 530, thereby serving as a ground for protecting the camera device 200 from electrostatic discharge (ESD).

The image sensing unit 330 may further include a heat dissipation member 520 disposed on or attached to the reinforcing member 510. In an example, the heat dissipation member 52 may be attached to at least one of the first board 531 or the reinforcing member 510, and may perform a heat dissipation function.

Next, the first position sensing part 71 and the second position sensing part 72 will be described.

The first sensor 71A may include a first input terminal, a second input terminal, a first output terminal, and a second output terminal. The second sensor may include a first input terminal, a second input terminal, a first output terminal, and a second output terminal.

For example, the first input terminal of the first sensor 71A and the first input terminal of the second sensor 71B may be negative (-) input terminals, and the second input terminal of the first sensor 71A and the second input terminal of the second sensor 71B may be positive (+) input terminals. Here, the positive polarity and the negative polarity may not only mean types of polarities, but may also mean the presence of difference in magnitude between terminals having the same polarity.

In addition, for example, the first output terminal of the first sensor 71A and the first output terminal of the second sensor 71B may be negative (-) output terminals, and the second output terminal of the first sensor 71A and the second output terminal of the second sensor 71B may be positive (+) output terminals.

The first and second input terminals of the first sensor 71A and the first and second input terminals of the second sensor 71B may be connected in parallel to each other. The first and second output terminals of the first sensor 71A and the first and second output terminals of the second sensor 71B may be connected to each other in series.

In addition, a first output signal, e.g., a first output voltage, may be output from the second output terminal of the first sensor 71A and the first output terminal of the second sensor 71B. For example, the first output signal may be a result obtained by summing the output from the first sensor 71A and the output from the second sensor 71B. For example, the sensing range of the first position sensing part 71 may be defined as a sum of the sensing range of the first sensor 71A and the sensing range of the second sensor 71B. The first output signal V1 may be output through the first and second terminals of the circuit board 192. In addition, in an example, the third and fourth terminals of the first circuit board 192 may be conductively connected to the first coil 120A.

Since the output terminals of the first and second sensors 71A and 71B are connected to each other in series, the magnitude of the first output signal may be greater than the magnitude of an output from one sensor. That is, in the embodiment, since the output terminals of the first and second sensors 71A and 71B are connected to each other in series, the magnitude of the first output signal from the first position sensing part 71 corresponding to the movement range (displacement or stroke section) of the second lens assembly 622 in the first direction may be increased.

In order to implement continuous zooming, it is necessary to control the long stroke range or movement range of the second lens assembly 622, and in order to easily control the long stroke range (or movement range), it is necessary to increase the output from the Hall sensor detecting the displacement of the second lens assembly.

In general, when the output from the Hall sensor is forcibly increased in a digital manner, feedback control characteristics may deteriorate due to noise, leading to deterioration in reliability of zooming and focusing operation. Further, when an analog amplifier is placed in the camera device in order to amplify the output from the Hall sensor, spatial restrictions may be imposed by installation of the analog amplifier, leading to degradation in the freedom of design of the camera device.

In the embodiment, since the output terminals of the two Hall sensors 71A and 71B are connected to each other in series, the magnitude of the output signal from the first position sensing part 71 may be increased. Accordingly, the characteristics of the first actuator 310 for the second lens assembly 622 may be improved, and the above problems may be solved.

In an example, since the magnitude of the first output signal is increased, the code value (or data) corresponding to the first output signal from the first position sensing part 71 may be increased, the sensitivity of the first position sensing part 71 for the movement of the second lens assembly 622 may be improved, and accordingly, the resolution of the camera device may be improved. In this case, the code value may be a code value (or data) predetermined through calibration.

The description of the electrical connection relationship between the input terminals and the output terminals of the first sensor 71A and the second sensor 71B, the output signal from the first position sensing part 71, the first coil 120A, and the terminals of the first circuit board 192 may be equally or similarly applied to the electrical connection relationship between the third sensor 72A, the fourth sensor 72B, the output signal from the second position sensing part 72, the second coil 120B, and the terminals of the second circuit board 194. In an example, a second output signal, e.g., a second output voltage, may be output from the output terminals of the third sensor 72A and the fourth sensor 72B connected to each other in series. Since the output terminals of the third and fourth sensors 72A and 72B are connected to each other in series, the magnitude of the second output signal may be greater than the magnitude of an output from one sensor. That is, in the embodiment, since the output terminals of the third and fourth sensors 72A and 712 are connected to each other in series, the magnitude of the second output signal from the second position sensing part 72 corresponding to the movement range (or displacement or stroke section) of the third lens assembly 624 in the first direction may be increased. The above-described effects obtained by increase in the magnitude of the first output signal from the first position sensing part 71 may be equally or similarly applied to the second position sensing part 72.

The memory 596 may be located outside the second coil 120B. In an example, the memory 596 may be located outside the cavity in the second coil 120B.

The second circuit board 194 may include a terminal portion (or pad) (not shown) to which the memory 596 is mounted or soldered so as to be conductively connected thereto, and the terminal portion may be located outside the coil 120B or outside the cavity in the coil 120B.

The memory 596 may include two input terminals, a data terminal, and a clock terminal, and these terminals may be conductively connected to the second circuit board. The memory 596 may include a plurality of test terminals conductively connected to the two input terminals, to the data terminal, and to the clock terminal.

The memory 596 may transmit data to the outside or may receive data from the outside through the test terminals using a protocol for data communication, e.g., I2C communication. In this case, the data may be data necessary to perform module process inspection on the actuators, e.g., data necessary for driving of the driving parts 630 and 70.

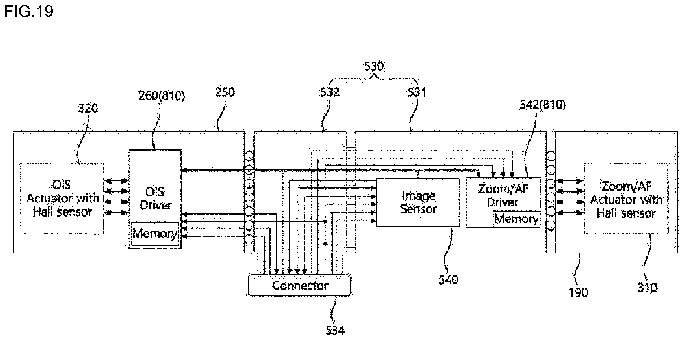

FIG. 19 is a functional block diagram of the camera device 200 according to the embodiment.

Referring to FIG. 19, the camera device 200 may include a first board unit 250, a second board unit 190, a third board unit 530, a first actuator 310, a second actuator 320, a controller 810, and an image sensor 540. In an example, the controller 810 may include a first driver 542 and a second driver 260.

The first driver 542 may move the second lens assembly 622 (or second lens group) in the optical-axis direction. The first driver 542 may move the third lens assembly 624 (or third lens group) in the optical-axis direction.

The first driver 542 may apply a first driving signal to the first coil 120A, may apply a second driving signal to the second coil 120B, and may control the first and second driving signals.

The second lens assembly 622 may be moved in the first direction by interaction between the first coil 120A to which the first driving signal is applied and the first magnet 130A, and the third lens assembly 624 may be moved in the first direction by interaction between the second coil 120B to which the second driving signal is applied and the second magnet 130B.

The second driver 260 may tilt or rotate the OIS moving unit (e.g., optical member 40) with respect to the second axis and/or the third axis. In addition, the second driver 260 may store a correction value, and may control tilt of the optical member 40 using the correction value.

The second driver 260 may apply a first OIS driving signal to the first OIS coils 230A and 230B. The OIS moving unit (e.g., holder 30) may be rotated at a predetermined angle about the second axis (e.g., X-axis) by interaction between the first OIS coils 230A and 230B to which the first OIS driving signal is applied and the first magnets 31a and 31B.

In addition, the second driver 260 may apply a second OIS driving signal to the second OIS coil 230C. The OIS moving unit (e.g., holder 30) may be rotated at a predetermined angle about the third axis (e.g., Y-axis) by interaction between the second OIS coil 230C to which the second OIS driving signal is applied and the second OIS magnet 32.

The path of the light introduced into the optical member 40 may be moved on a plane (e.g., XY-plane) perpendicular to the first-axis (optical axis or Z-axis) by the movement of the holder 30 coupled to the optical member 40, and accordingly, the image formed on the image sensor 540 may be moved in the X-axis direction and/or the Y-axis direction. In an example, the optical member 40 may be tilted or rotated at a predetermined angle with respect to the X-axis or the Y-axis.

That is, in the embodiment, blur of an image or shaking of a moving image, which is caused when the camera device is shaken due to user's handshaking while capturing an image or a moving image, may be corrected by controlling the movement of the holder 30.

In an example, each of the first driver 542 and the second driver 260 may include at least one of an analog-to-digital converter, an amplifier, a PID controller, or a memory.

The first driver 542 may receive the first output signal from the first position sensing part 71 of the first position sensor unit 170 and the second output signal from the second position sensing part 72 of the first position sensor unit 170.

The first driver 542 may generate a first code value corresponding to the result of analog-to-digital conversion of the first output signal received from the first position sensing part 71, and may control the first driving signal applied to the first coil 120A based on the result of comparison between the generated first code value and a first target value. For example, the first target value may be a reference code value corresponding to a target zoom position of the second lens assembly 622.

In addition, the first driver 542 may generate a second code value corresponding to the result of analog-to-digital conversion of the second output signal received from the second position sensing part 72, and may control the first driving signal applied to the first coil 120B based on the result of comparison between the generated second code value and a second target value. For example, the second target value may be a reference code value corresponding to a target focus position of the third lens assembly 624.

The reference code value (or data) related to the output from each of the first and second position sensing parts 71 and 72 may be set in advance through calibration, and may be stored in the memory of the first driver 542. In another embodiment, the reference code value may be stored in a memory 760 of an optical instrument 200A.

The second driver 260 may receive the first output signal from the first OIS position sensors 240A and 240B of the second position sensor unit 240 and the second output signal from the second OIS position sensor 240C.

The second driver 260 may generate a third code value corresponding to the result of analog-to-digital conversion of the first output signal received from the first OIS position sensors 240A and 240B, and may control the first driving signal applied to the first OIS coils 230A and 230B of the second driving part 70 based on the result of comparison between the generated third code value and a third target value.

In addition, the second driver 260 may generate a fourth code value corresponding to the result of analog-to-digital conversion of the second output signal received from the second OIS position sensor 240C, and may control the second driving signal applied to the second OIS coil 230C based on the result of comparison between the generated fourth code value and a fourth target value.

For example, the third target value may be a reference code value (or data) related to the output from the first OIS position sensors 240A and 240B corresponding to a target second-axis (X-axis) tilt position of the OIS moving unit of the second actuator 320. In addition, for example, the fourth target value may be a reference code value (or data) related to the output from the second OIS position sensor 240C corresponding to a target third-axis (Y-axis) tilt position of the OIS moving unit of the second actuator 320. The reference code value (or data) related to the output from each of the first OIS position sensors 240A and 240B and the second OIS position sensor 240C may be set in advance through calibration, and may be stored in the memory of the second driver 260. In another embodiment, the reference code value may be stored in the memory 760 of the optical instrument 200A.

The first position sensor unit 170 included in the first actuator 310 may detect displacement of the second lens assembly 622, and may output the first output signal corresponding to the result of the detection. In addition, the first position sensor unit 170 may detect displacement of the third lens assembly 624, and may output the second output signal corresponding to the result of the detection.

Each of the first and second sensors 240A and 240B of the first OIS position sensor may detect displacement of the holder 30 in the third-axis direction, and may output an output signal corresponding to the result of the detection.

Alternatively, in another embodiment, the input terminals of the first and second sensors 240A and 240B may be connected in parallel to each other, the output terminals of the first and second sensors 240A and 240B may be connected to each other in series, and one output signal may be output from both ends of the output terminals connected to each other in series.

The second OIS position sensor 240C may detect displacement of the holder 30 in the second-axis direction, and may output on output signal corresponding to the result of the detection.

In an example, the camera device 200 may be accurately focused based on the target position of the second lens assembly 622 and the target position of the third lens assembly 624.

The image sensing unit 330 may include an image sensor 540 configured to convert light reflected from a subject into an electrical signal. In an example, the image sensor 540 may include a light-receiving part configured to receive light and to convert the received light into an electrical signal and an analog-to-digital converter configured to convert the converted electrical signal into a digital signal. In addition, in an example, the image sensor 540 may further include an image signal processor configured to perform signal processing on the digital signal.

The camera device 200 may further include a temperature sensor 566 for temperature compensation. The temperature sensor 566 may output temperature information corresponding to the result of measurement of the temperature of the camera device 200.

The temperature information from the temperature sensor 566 may be used for temperature compensation for focusing operation of the third lens assembly 624. In an example, the compensation value corresponding to the temperature information may be stored in the memory 226B of the first driver 542.

For example, since the second lens assembly 622, which is responsible for zooming, moves according to the magnification set by the user, it is possible to perform temperature compensation on the third lens assembly 624, which is responsible for autofocus, in a state (or condition) in which the position of the second lens assembly 622 is fixed.

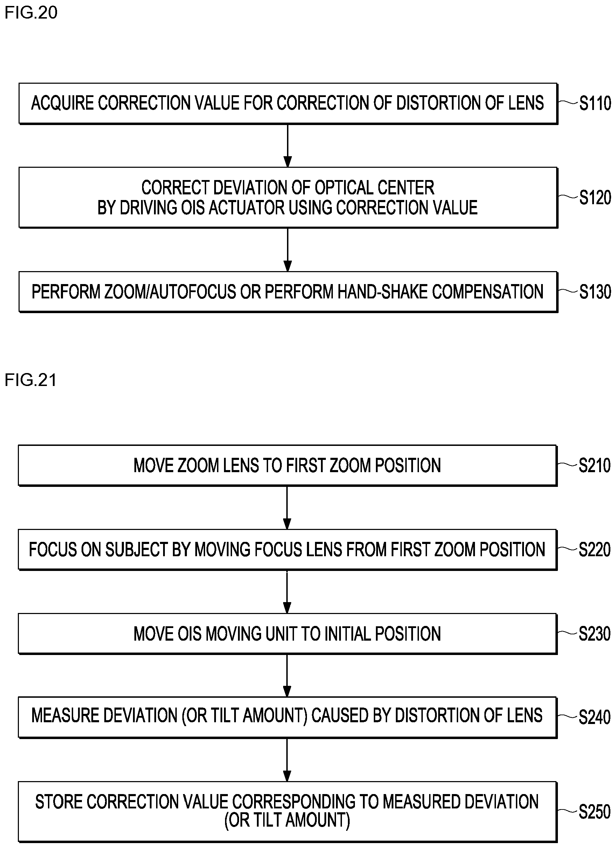

FIG. 20 is a flowchart showing a control method of the controller 810 to perform zooming, AF, or hand-shake compensation of the camera device according to the embodiment.

Referring to FIG. 20, the controller 810 acquires a correction value for correction or compensation of deviation (or tilt) of the optical axis (or optical center) caused by distortion (or tilt) of the lens assembly (or lens) (S110). For example, in FIG. 20, the controller 810 may be the second driver 260. The correction value may alternatively be referred to as a "compensation value" or a "set value".

Here, the term "acquire" may mean "receive", "extract", "select", or "read".

For example, the correction value may be related to the initial position of the optical member 40 for correction of distortion of the lens assembly, e.g., the center of the fixed lens group or the center of the moving lens group. For example, the correction value may be a data value (or code value) corresponding to the output from the OIS position sensors 240 (the first OIS position sensors 240A and 240B and the second OIS position sensor 240C) detecting displacement of the optical member 40 to set the initial position of the optical member 40.

For example, the correction value may include a data value related to the output from the first position sensors 240A and 240B corresponding to the initial position of the optical member 40. In addition, the correction value may include a data value related to the output from the second position sensor 240C corresponding to the initial position of the optical member 40.

Subsequently, the controller 810 corrects deviation (or tilt) of the optical axis (or optical center) caused by distortion of the lens assembly (or lens) by moving the OIS moving unit (e.g., holder 30) through the OIS actuator 320 using the correction value (S120).

Subsequently, zoom/autofocus operation or hand-shake compensation operation is performed in the state in which the deviation (or tilt) of the optical axis (or optical center) is corrected (S130).

The correction value may be stored in the memory included in the controller 810, and the controller 810 may acquire the correction value from the memory mounted therein. In another embodiment, the correction value may be acquired from a memory separately provided form the controller 810.

For example, the deviation of the optical center or the optical axis may be an extent to which the optical axis (or optical center) of the lens assembly (or lens) is distorted or tilted with respect to a reference position. For example, the reference position may be a predetermined position (or coordinate value) at which the optical axis (or optical center) of the lens assembly (or lens) is aligned with the imaging area of the image sensor 540 when there is no distortion of the lens assembly (or lens).

For example, the reference position (or predetermined coordinate value) may be the center (or coordinate value of the center, e.g., origin (0,0)) of the imaging area of the image sensor 540.

For example, the deviation (or tilt amount) may be a difference between the coordinate value of a first position of the imaging area of the image sensor 540 with which the distorted or tilted optical axis (or optical center) of the lens assembly (or lens) is aligned and a predetermined coordinate value. For example, the correction value may be generated based on the deviation.

Ideally, when there is no distortion (or tilt) of the lens assembly (or lens), the optical axis (or optical center) of the lens assembly may be aligned with the reference position (or predetermined coordinate value) of the image sensor 540. However, when distortion (or tilt) occurs in the lens assembly, the optical axis (or optical center) of the lens assembly (or lens) may be aligned with the first position of the imaging area of the image sensor 540, rather than being aligned with the reference position of the image sensor 540. For example, the deviation or the tilt amount may be a difference between the reference position and the first position. For example, the deviation may be a difference in coordinate value between the reference position and the first position.

The lens assembly may be distorted for various reasons. For example, the reasons may include the shape of the lens barrels 29A and 39A of the lens assembly, the shape (e.g., degree of bending) of the guide grooves 212A and 212B, and distortion of the center of the lens assembly due to installation of lenses included in the lens assembly. In particular, in the case of a zoom camera device including two or more lens assemblies, the stroke or moving distance of the lens assembly (e.g., zoom lens) in the optical-axis direction is long, and therefore, distortion of the lens may occur due to movement of the lens assembly.

For example, the distortion (or tilt) may include at least one of static tilt or dynamic tilt. The static tilt may be tilt of the lens assembly (or lens) at a specific position (e.g., zoom position or focus position) of the lens assembly (or lens). The dynamic tilt may be tilt of the lens assembly (or lens) at any two specific positions (e.g., two zoom positions or two focus positions) of the lens assembly (or lens).

In an example, the lens assembly that is subject to the above-described distortion may include at least one of the second lens assembly 622 (or second lens group) or the third lens assembly 624 (or third lens group). In another embodiment, the lens assembly that is subject to the distortion may further include the first lens assembly 622.

In addition, in an example, an object that is subject to the distortion may include at least one of a lens group, a lens, or a lens barrel included in the lens assembly.

In an example, ideally, when there is no distortion (or tilt) of the lens assembly (or lens), data values corresponding to outputs from the first position sensors 240A and 240B and the second position sensor 240C may be set such that the initial position of the optical member 40 is located at a predetermined position. For example, the predetermined position may be a position at which the center of the first sensor 240A and the center of the first magnet unit 31A are aligned with or overlap each other, a position at which the center of the second sensor 240B and the center of the second magnet unit 31B are aligned with or overlap each other, or a position at which the center of the third sensor 240C and the center of the third magnet unit 31C are aligned with or overlap each other.

In an example, at the initial position of the optical member 40 controlled based on the correction value, the center of each of the first to third sensors may not be aligned with or may not overlap the center of a corresponding one of the first to third magnet units.

In another embodiment, when there is no distortion (or tilt) of the lens assembly (or lens), the predetermined position may be set based on data values corresponding to outputs from the first position sensors 240A and 240B and the second position sensor 240C related to a specific position of the optical member 40 that is irrelevant to distortion (or tilt) of the lens assembly (or lens).

The controller 810 may control tilt of the optical member 40 using the correction value, and may perform hand-shake compensation operation or zoom and/or autofocus operation.

In an example, the controller 810 may set the initial position of the optical member 40 by controlling tilt of the optical member 40 using the correction value, and may perform hand-shake compensation operation of controlling movement of the OIS moving unit or may perform zoom and/or autofocus operation through the second and third lens assemblies 622 and 624 in the state in which tilt of the optical member 40 is controlled.

FIG. 21 illustrates an embodiment of a method of generating a correction value for compensation of deviation caused by distortion of a lens.

Referring to FIG. 21, the controller 810 moves the second lens assembly 622, which is a zoom lens, to a first zoom position (S210). For example, the first zoom position may be a tele position. In another embodiment, the first zoom position may be a wide position.

For example, the wide position may be a position corresponding to the lowest magnification among the implementable zoom magnifications of the camera device 200, and the tele position may be a position corresponding to the highest magnification among the implementable zoom magnifications of the camera device 200.

For example, the wide position may be a 1x zoom position, and the tele position may be a 5x zoom position. However, the disclosure is not limited thereto. Information about the first zoom position may be stored in the controller 810 or 780.

In still another embodiment, the first zoom position may be a position corresponding to an intermediate magnification located between the tele position and the wide position.

Subsequently, the controller 810 moves the third lens assembly 624, which is a focus lens, from the first zoom position to focus on the subject (S220).

Subsequently, the controller 810 drives the second actuator 320 to move the OIS moving unit (e.g., holder 30) to the initial position (S230).

For example, the initial position of the OIS moving unit (e.g., holder 30) may be a position at which the emission surface 8b of the optical member 40 is made parallel to the imaging area of the image sensor 540.

Alternatively, for example, when there is no distortion of the lens assembly and thus the optical axis of the lens assembly is ideally aligned with a determined position (e.g., center of the imaging area) of the image sensor 540, the initial position of the OIS moving unit (e.g., holder 30) may be a position at which the center of the emission surface 8b of the optical member 40 and the center of the lens assembly (or optical axis of the lens assembly) are aligned with each other. Alternatively, the initial position of the OIS moving unit (e.g., holder 30) may be a position at which the emission surface 8b of the optical member 40 and the optical axis of the lens assembly are made perpendicular to each other under a given condition.

Subsequently, the controller 810 measures deviation (or tilt amount) caused by distortion (or tilt) of the lens assembly (or lens) at the initial position of the OIS moving unit (e.g., holder 30) (S240).

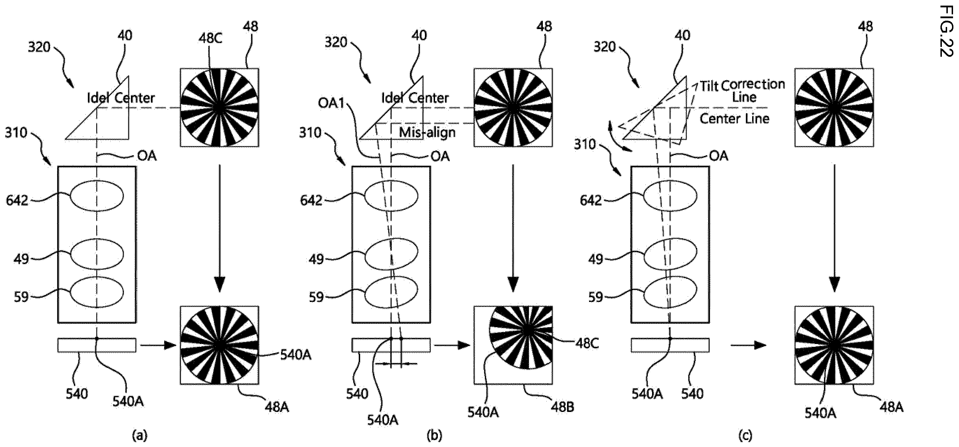

In an example, the deviation at the initial position of the OIS moving unit may be measured according to the definition of deviation described in step S110. Deviation measurement will be described later with reference to FIG. 22.

Subsequently, the controller 810 stores a correction value corresponding to the measured deviation (or tilt amount) (S250). In an example, the correction value may be stored in the memory of the second driver 260. In another embodiment, the correction value may be stored in the memory of the first driver 542. Alternatively, in still another embodiment, the correction value may be stored in the memory of the controller 780 of the optical instrument 200A or an application processor (AP) .

FIG. 22 illustrates correction of deviation caused by distortion of the lens assembly or the lens and deviation caused by movement of the OIS moving unit.

FIG. 22(a) illustrates an ideal state in which distortion does not occur in the lens assembly or the lens. In FIG. 22(a), the optical center (or optical axis OA) of the lens assembly (or lens) may be aligned with the center 540A of the imaging area of the image sensor 540, and an image 48A of a detected subject 48 may be displayed in the original state on the imaging area of the image sensor 540. In an example, the center 48C of the image 48A of the subject 48 may be aligned with the center 540A of the image sensor 540.

FIG. 22(b) illustrates a case in which distortion occurs in the lens assembly or the lens. In FIG. 22(b), the optical center (or optical axis OA1) of the lens assembly (or lens) is not aligned with the center 540A of the image sensor 540. Accordingly, due to the distortion of the lens assembly or the lens, the center 48C of the image 48B of the subject 48 detected by the image sensor 540 may not coincide with the center 540A of the image sensor 540, and may be spaced apart from the center 540A of the image sensor 540. This may be referred to as distortion or tilt of the optical center of the lens assembly (or lens).

Accordingly, in FIG. 22(b), the image 48B of the subject 48 may be distorted, and resolution may be deteriorated.

For example, the deviation may be a difference between the coordinate value of the center 540A of the imaging area of the image sensor 540 and the coordinate value of the point 48C at which the distorted optical axis OA1 meets or is aligned with the imaging area of the image sensor 540. For example, the deviation may be a difference between the coordinate value of the center 540A of the imaging area of the image sensor 540 and the coordinate value of the center 48C of the subject 48B.

In FIG. 22(c), the optical member 40 of the OIS moving unit may be moved or may be rotated or tilted at a predetermined angle based on the correction value corresponding to the deviation, with a result that the point at which the optical axis and the imaging area of the image sensor 540 meet each other may coincide with the center 540A of the image sensor 540. Accordingly, the center of the image of the subject 48 detected by the image sensor 540 may be aligned with the center of the image sensor, the occurrence of distortion of the image of the subject 48 due to distortion of the lens assembly (or lens) may be prevented, and resolution may be improved.

In the embodiment shown in FIG. 21, the deviation measured when the second lens assembly 622 is located at the tele position is also used at another zoom position of the second lens assembly 622. When the second lens assembly 622 is located at another zoom position, deviation may vary. However, since the tele position corresponds to high magnification, image distortion is greatly influenced by deviation caused by distortion of the lens assembly (or lens).

Here, the correction value may be a value based on which the second actuator 320 moves the OIS moving unit to a target position or rotates the OIS moving unit at a predetermined angle in order to correct or compensate for distortion of the lens assembly (or lens).

In detail, the correction value may be a value based on which the optical member 40 is rotated or tilted to a target position so that a point to be described later, at which the optical axis (or optical center) and the imaging area of the image sensor 540 meet each other, coincides with the center 540A of the image sensor 540.

In the embodiment, since the OIS moving unit is rotated by feedback driving using the OIS position sensor unit 240, the correction value may be a code value (or data value) related to output from the OIS position sensor unit 240 corresponding to the target position. For example, the correction value may be a value obtained by performing analog-to-digital conversion on the output from the OIS position sensor unit 240 at the target position.

In detail, the correction value may include a first correction code value (first data value) related to output from the first OIS position sensors 240A and 240B corresponding to the target position and a second correction code value (second data value) related to output from the second OIS position sensor 240C corresponding to the target position.

For example, the deviation may include x-axis deviation in the x-axis direction and y-axis deviation in the y-axis direction. For example, the x-axis deviation may be a difference between the x-coordinate value of the center 540A and the x-coordinate value of the point 48C, and the y-axis deviation may be a difference between the y-coordinate value of the center 540A and the y-coordinate value of the point 48C.

In an example, the first and second correction code values may be set based on the x-axis deviation and the y-axis deviation. In an example, the first correction code value may be set based on one of the x-axis deviation and the y-axis deviation, and the second correction code value may be set based on the remaining one of the x-axis deviation and the y-axis deviation.

The controller 810, e.g., the second driver 260, may receive an output signal from the OIS position sensor 240, and may control a driving signal applied to the OIS coil 230 using a code value (or data value) corresponding to the result of analog-to-digital conversion of the received output signal and a correction value. The controller 810 may move the OIS moving unit or the optical member 40 to the target position by controlling the driving signal applied to the OIS coil 230. As a result, the embodiment may correct deviation (or tilt) of the optical center caused by distortion of the lens assembly (or lens), may prevent image distortion, and may improve resolution.

In an example, the controller 810 may control the driving signal applied to the OIS coil 230 so that the code value (or data value) corresponding to the result of the analog-to-digital conversion approaches the correction value.

In an example, the controller 810, e.g., the second driver 260, may receive a first output signal from the first OIS position sensors 240A and 240B and a second output signal from the second OIS position sensor 240C, and may control the driving signal applied to the OIS coil 230 so that the code values (or data values) corresponding to the result of analog-to-digital conversion of the received first and second output signals approach the first and second correction code values.

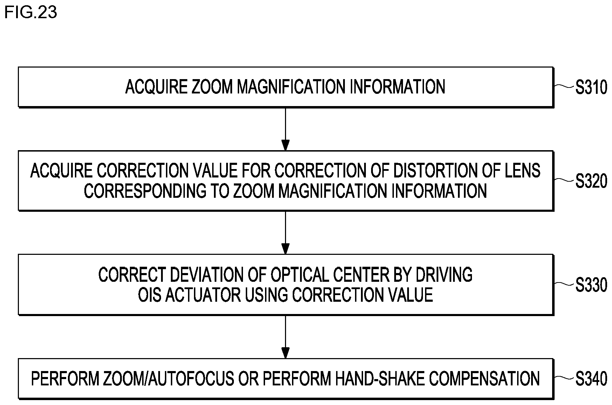

FIG. 23 is a flowchart showing a control method of the controller 810 to perform zooming, AF, or hand-shake compensation of the camera device according to another embodiment.

Referring to FIG. 23, zoom magnification information (or zoom position information) is acquired (S310). The zoom magnification information may be determined by user selection or input, and the controller 810 may receive the zoom magnification information determined by the user. In an example, the zoom magnification information may be received from the controller 780 of the optical instrument 200A.

The controller 810, e.g., the second driver 260, acquires a correction value for correction or compensation of distortion of the lens corresponding to the zoom magnification information (S320).

Subsequently, the OIS actuator is driven using the correction value to correct deviation of the optical center (S330).

Subsequently, in the state in which deviation of the optical axis (or optical center) is corrected, zoom/autofocus operation is performed, or hand-shake compensation operation is performed at the zoom position according to the acquired zoom magnification information (S340).

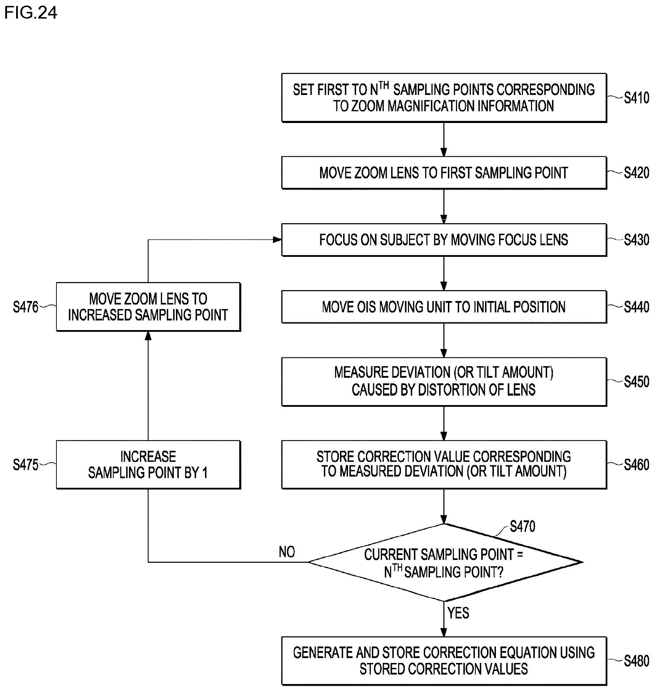

FIG. 24 illustrates a method of generating a correction value for correction of deviation caused by distortion of the lens corresponding to zoom magnification information.

Referring to FIG. 24, the controller 810 sets first to N^{th} (N being a natural number > 1) related to the zoom position of the second lens assembly 622 corresponding to zoom magnification information (S410).

For example, the zoom magnification information may be M^{th} magnification, and M may be a positive rational number. For example, the zoom magnification information may be first magnification, third magnification, or fifth magnification. For example, the sampling point may be a zoom position of the second lens assembly 622 matching the zoom magnification information. For example, the sampling point may include a tele position and a wide position.

Subsequently, the controller 810 drives the 1^{st} actuator 310 to move the second lens assembly 622 to the first sampling point (S420).

Subsequently, the controller 810 drives the 1^{st} actuator 310 to move the third lens assembly 624 and thus to focus on the subject (S430).

Subsequently, the controller 810 drives the second actuator 320 to move the OIS moving unit (e.g., holder 30) to the initial position (S440). For the initial position of the OIS moving unit, reference may be made to the description given with reference to FIG. 21.

Subsequently, the controller 810 measures deviation or (tilt amount) caused by distortion (or tilt) of the lens assembly (or lens) at the initial position of the OIS moving unit (e.g., holder 30) (S450). The description of S240 may be equally or similarly applied to S450.

Subsequently, the controller 810 stores a correction value corresponding to the measured deviation (or tilt amount) (S460). The description of S250 may be equally or similarly applied to S460.

Subsequently, the controller 810 determines whether the current sampling point is identical to the N^{th} sampling point (S470).

Subsequently, when the current sampling point is not identical to the N^{th} sampling point, the controller 810 increases the sampling point by 1 (S475), and moves the second lens assembly 622 to the increased sampling point (S476).

Subsequently, S430 to S470 are repeatedly performed. Subsequently, when the current sampling point is identical to the N^{th} sampling point, the controller 810 generates and stores a correction equation using the stored correction values corresponding to the first to N^{th} sampling points (S480).

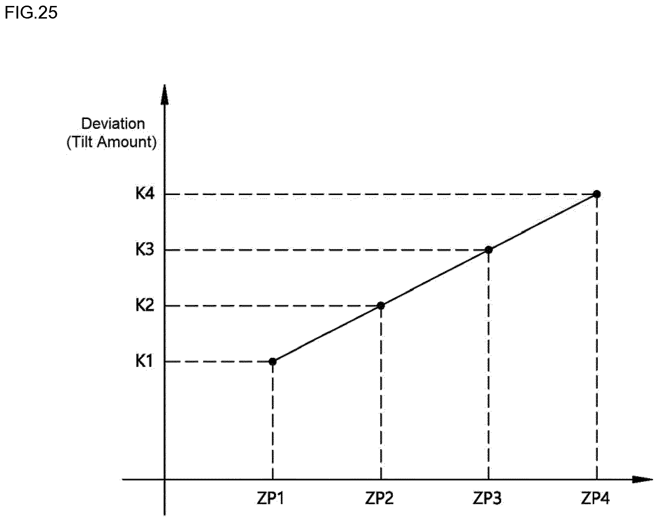

FIG. 25 illustrates deviation (or tilt amount) corresponding to sampling points ZP1 to ZP4 acquired through the method according to the embodiment shown in FIG. 24. In FIG. 25, ZP1 may be a wide position, and ZP4 may be a tele position. In FIG. 25, the number of sampling points may be four. However, in another embodiment, the number of sampling points may be two or more.

Referring to FIG. 25, deviations K1 to K4 corresponding to the respective sampling points ZP1 to ZPN (N = 4) may be acquired through the method according to the embodiment shown in FIG. 24.

The controller 810 or 780 may interpolate the deviations K1 to K4 corresponding to the sampling points ZP1 to ZP4 using an interpolation method, and may acquire, compute, or calculate an interpolation equation or interpolation data related to the deviations based on the result of the interpolation. Deviations at zoom positions other than the sampling points ZP1 to ZPN (N=4) may be estimated using the interpolation equation or the interpolation data.

For example, the interpolation method may include at least one of various interpolation methods. For example, the interpolation method may include a linear interpolation method, a polynomial interpolation method, a spline interpolation method, an exponential interpolation method, a log_linear interpolation method, a Lagrange interpolation method, a Newton interpolation method, and a bilinear interpolation method.

For example, two deviations (e.g., K1 and K2) corresponding to two adjacent sampling points (e.g., ZP1 and ZP2) may be interpolated, and a first interpolation equation corresponding to the result of the interpolation may be acquired. In the section between ZP1 and ZP2, deviations with respect to zoom positions between ZP1 and ZP2 may be estimated using the first interpolation equation. In FIG. 25, the zoom position may include a first section between ZP1 and ZP2, a second section between ZP2 and ZP3, and a third section between ZP3 and ZP4. An interpolation equation corresponding to each section may be acquired, computed, or calculated, and deviation corresponding to each section may be acquired, computed, estimated, or calculated using this interpolation equation.

FIG. 25 shows a case in which deviation increases as it goes from low magnification to high magnification. However, in another embodiment, deviation may decrease as it goes from low magnification to high magnification. Is still another embodiment, deviation may increase in a certain section, may decrease in another section, and may be maintained in still another section.

Deviations corresponding to successive zoom positions may be acquired as described with reference to FIG. 25. In addition, as described with reference to FIGs. 21 and 22, the controller may acquire correction values corresponding to the deviations acquired in FIG. 25.

In FIG. 21, the controller 810 stores one correction value. However, in FIG. 25, the controller 8100 may store correction values with respect to successive zoom positions. In an example, the correction values acquired in FIG. 25 may be defined through an algorithm or an equation, and may be stored in the controller 810. The controller 810 may acquire a correction value corresponding to the zoom position or the zoom magnification information of the second lens assembly 622 using the algorithm or the equation.

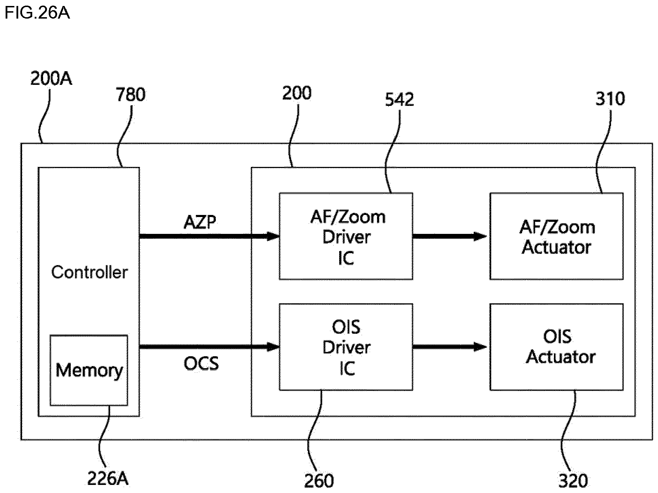

FIG. 26A illustrates an embodiment of supply of information AZP and a correction value OCS related to a zoom position and a focus position.

Referring to FIG. 26A, the controller 780 of the optical instrument 200A may store information AZP and a correction value OSC related to a zoom position (or zoom magnification) and a focus position. The controller 780 may be an application processor (AP), without being limited thereto. The optical instrument 200A may include a memory 226A configured to store information AZP and a correction value OSC related to a zoom position (or zoom magnification) and a focus position. The memory 226A may be included in the controller 780, or may be separately provided from the controller 780.

The controller 780 of the optical instrument 200A may transmit the correction value OCS to the second driver 260 of the camera device 200.

The second driver 260 may control movement or rotation of the OIS moving unit (holder 30 and optical member 40) using the correction value received from the controller 780.

In an example, the second driver 260 may control a driving signal applied to the OIS coil 230 of the second actuator 320 using the correction value received from the controller 780.

The controller 780 of the optical instrument 200A may transmit zoom position information (or zoom magnification) and focus position information to the first driver 542 of the camera device 200. The first driver 542 may control movement of the second lens assembly 622 using the zoom position information (or zoom magnification) received from the controller 780, and may control movement of the third lens assembly 624 using the focus position information.

In an example, the first driver 542 may control a first driving signal applied to the first coil 120A using the zoom position information (or zoom magnification), and may control a second driving signal applied to the second coil 120B using the focus position information.

The controller 780 may transmit and receive data, e.g., the zoom magnification information (or zoom position information) and the focus position information, to and from each of the first driver 542 and the second driver 260 using a protocol for data communication, e.g., I2C communication.

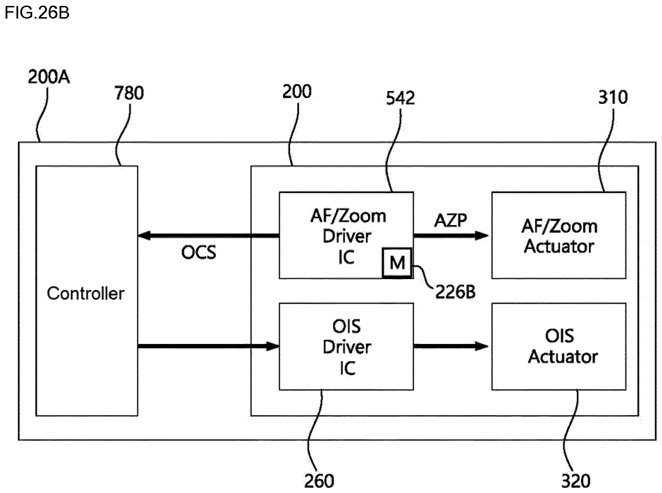

FIG. 26B illustrates another embodiment of supply of information and a correction value related to a zoom position and a focus position.

Referring to FIG. 26B, the entity that stores the zoom position information (or zoom magnification), the focus position information, and the correction value OSC may be the first driver 542. The first driver 542 may include a memory 226B configured to store the zoom position information (or zoom magnification), the focus position information, and the correction value OSC.

The first driver 542 may control movement of the second lens assembly 622 using the zoom position information (or zoom magnification) stored in the memory 226B, and may control movement of the third lens assembly 624 using the focus position information stored in the memory 226B. The description given with reference to FIG. 26A may be equally or similarly applied to the function of the first driver 542.

The first driver 542 may transmit the correction value OSC to the controller 780, and the controller 780 may transmit the correction value OSC received from the first driver 542 to the second driver 260. The description given with reference to FIG. 26A may be equally or similarly applied to the function of the first driver 260.

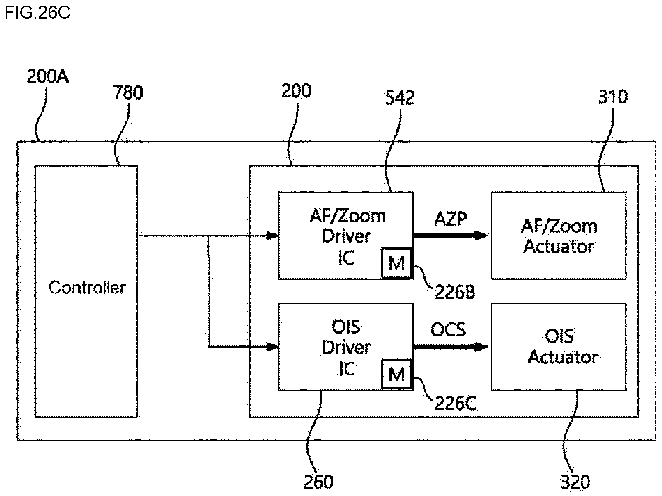

FIG. 26C and FIG. 26B illustrate still another embodiment of supply of information and a correction value related to a zoom position and a focus position.

Referring to FIG. 26C, the entity that stores the zoom position information (or zoom magnification) and the focus position information may be the first driver 542, and the entity that stores the correction value OSC may be the second driver 260.

In an example, the first driver 542 may include a memory 226B configured to store the zoom position information (or zoom magnification) and the focus position information. In addition, the second driver 260 may include a memory 226C configured to store the correction value OSC.

The description given with reference to FIG. 26B may be equally or similarly applied to the function of the first driver 542. The second driver 260 may control movement or rotation of the OIS moving unit (holder 30 and optical member 40) using the correction value OSC stored in the memory 226C. The description given with reference to FIG. 26A may be equally or similarly applied to the function of the second driver 260.

In FIG. 26C, since the zoom position information (or zoom magnification) and the focus position information are stored in the first driver 542 and the correction value OSC is stored in the second driver 260, the first and second drivers 542 and 260 may drive the first and second actuators 310 and 320 at high driving speed.

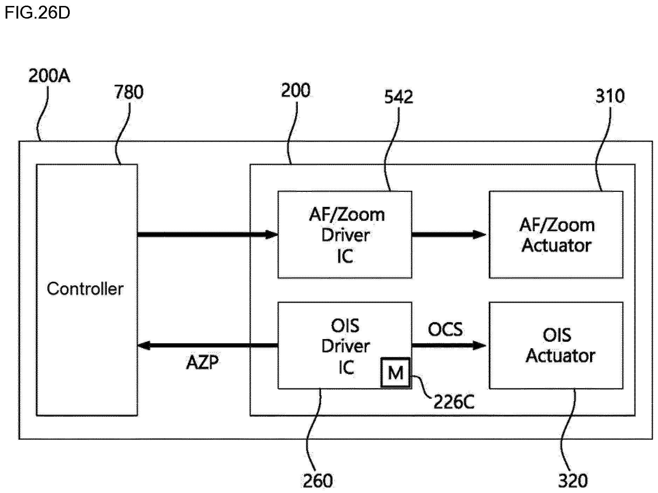

FIG. 26D illustrates still another embodiment of supply of information and a correction value related to a zoom position and a focus position.

Referring to FIG. 26D, the entity that stores the information AZP and the correction value OSC related to the zoom position and the focus position may be the second driver 260. The second driver 260 may include a memory 226C configured to store the zoom position information (or zoom magnification), the focus position information, and the correction value OSC.

The second driver 260 may transmit information AZP about the zoom position and the focus position to the controller 780, and the controller 780 may transmit the information AZP about the zoom position and the focus position received from the second driver 260 to the first driver 260. The description given with reference to FIG. 26A may be equally or similarly applied to the function of the first driver 260.

The second driver 260 may control movement or rotation of the OIS moving unit (holder 30 and optical member 40) using the correction value stored in the memory 226C. The description given with reference to FIG. 26A may be equally or similarly applied to the function of the second driver 260.

If the optical center of the lens assembly (or lens) does not coincide with the center of the image sensor 540 due to distortion of the lens assembly (or lens), distortion may occur in the image detected by the image sensor 540, leading to deterioration in the resolution of the camera device. In the embodiment, since movement (or rotation) of the OIS moving unit (or optical member 40) is controlled, distortion or deviation of the optical center caused by distortion of the lens assembly (or lens) may be corrected or compensated. As a result, the resolution of the camera device may be improved.

In addition, the camera device 200 according to the embodiment may be included in an optical instrument for the purpose of forming an image of an object present in a space using reflection, refraction, absorption, interference, and diffraction, which are characteristics of light, for the purpose of increasing visibility, for the purpose of recording and reproduction of an image using a lens, or for the purpose of optical measurement or image propagation or transmission. For example, the optical instrument according to the embodiment may be a cellular phone, a mobile phone, a smartphone, a portable smart device, a digital camera, a laptop computer, a digital broadcasting terminal, a personal digital assistant (PDA), a portable multimedia player (PMP), a navigation device, etc., without being limited thereto, and may also be any of devices for capturing images or pictures.

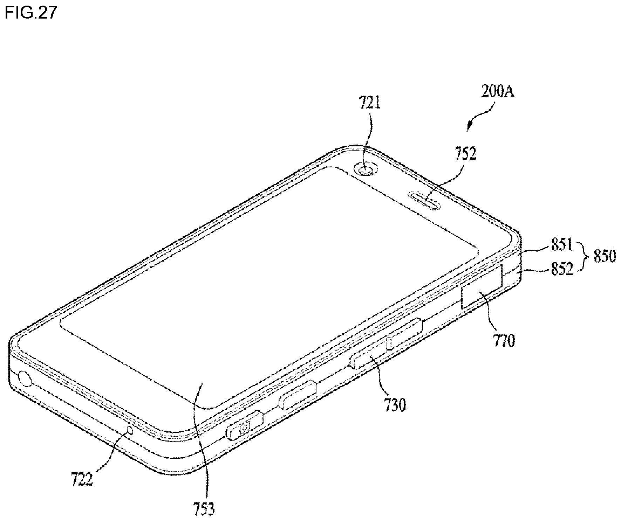

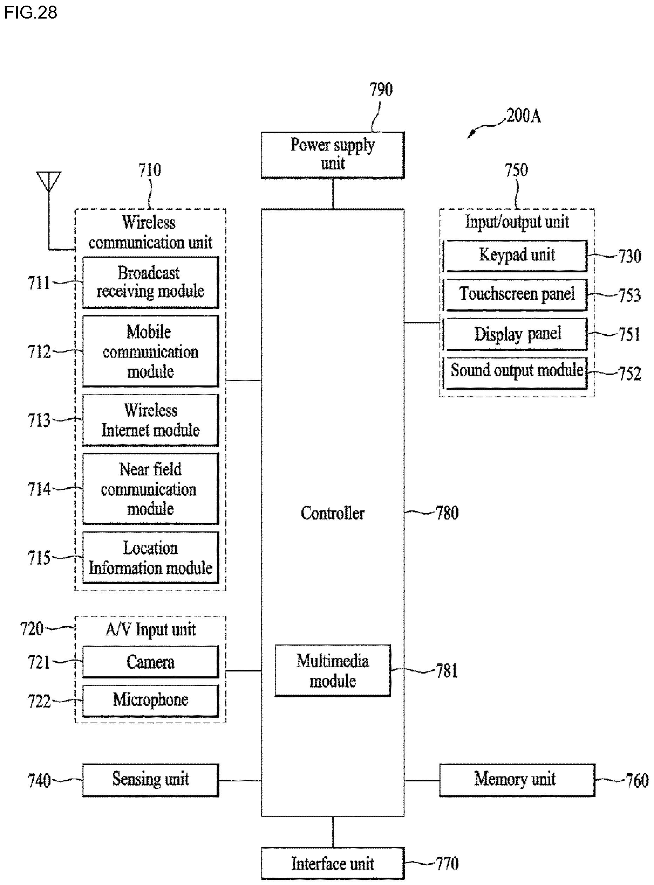

FIG. 27 is a perspective view of an optical instrument 200A according to an embodiment, and FIG. 28 is a configuration diagram of the optical instrument 200A shown in FIG. 27.

Referring to FIGs. 27 and 28, the optical instrument 200A (hereinafter referred to as a portable "terminal") may include a body 850, a wireless communication unit 710, an A/V input unit 720, a sensing unit 740, an input/output unit 750, a memory 760, an interface unit 770, a controller 780, and a power supply unit 790.

The body 850 shown in FIG. 27 may have a bar shape, without being limited thereto, and may be any of various types such as, for example, a slide type, a folder type, a swing type, or a swivel type, in which two or more sub-bodies are coupled so as to be movable relative to each other.

The body 850 may include a case (a casing, a housing, a cover, or the like) defining the external appearance thereof. In an example, the body 850 may be divided into a front case 851 and a rear case 852. A variety of electronic components of the terminal may be mounted in the space defined between the front case 851 and the rear case 852.

The wireless communication unit 710 may include one or more modules, which enable wireless communication between the terminal 200A and a wireless communication system or between the terminal 200A and a network in which the terminal 200A is located. In an example, the wireless communication unit 710 may include a broadcast receiving module 711, a mobile communication module 712, a wireless Internet module 713, a nearfield communication module 714, and a location information module 715.

The audio/video (A/V) input unit 720 serves to input audio signals or video signals, and may include a camera 721 and a microphone 722.

The camera 721 may include the camera device 200 according to the embodiment.

The sensing unit 740 may sense the current state of the terminal 200A, such as the open or closed state of the terminal 200A, the position of the terminal 200A, the presence or absence of a user's touch, the orientation of the terminal 200A, or the acceleration/deceleration of the terminal 200A, and may generate a sensing signal to control the operation of the terminal 200A. For example, when the terminal 200A is a slide-type phone, whether the slide-type phone is open or closed may be detected. In addition, the sensing unit serves to sense whether power is supplied from the power supply unit 790 or whether the interface unit 770 is coupled to an external device.

The input/output unit 750 serves to generate visual, audible, or tactile input or output. The input/output unit 750 may generate input data to control the operation of the terminal 200A, and may display information processed in the terminal 200A.

The input/output unit 750 may include a keypad unit 730, a display module 751, a sound output module 752, and a touchscreen panel 753. The keypad unit 730 may generate input data in response to input to a keypad.

The display module 751 may include a plurality of pixels, the color of which varies in response to electrical signals. In an example, the display module 751 may include at least one of a liquid crystal display, a thin-film transistor liquid crystal display, an organic light-emitting diode, a flexible display, or a 3D display.

The sound output module 752 may output audio data received from the wireless communication unit 710 in a call-signal receiving mode, a call mode, a recording mode, a voice recognition mode, or a broadcast receiving mode, or may output audio data stored in the memory 760.

The touchscreen panel 753 may convert variation in capacitance, caused by a user's touch on a specific region of a touchscreen, into electrical input signals.

The memory 760 may store programs for the processing and control of the controller 780, and may temporarily store input/output data (e.g., a phone book, messages, audio, still images, pictures, and moving images). For example, the memory 760 may store images captured by the camera 721, for example, pictures or moving images.

The interface unit 770 serves as a passage for connection between the terminal 200A and an external device. The interface unit 770 may receive data or power from the external device, and may transmit the same to respective components in the terminal 200A, or may transmit data inside the terminal 200A to the external device. For example, the interface unit 770 may include a wired/wireless headset port, an external charger port, a wired/wireless data port, a memory card port, a port for connection of a device having an identification module, an audio input/output (I/O) port, a video input/output (I/O) port, and an earphone port.

The controller 780 may control the overall operation of the terminal 200A. For example, the controller 780 may perform control and processing related to voice calls, data communication, and video calls.

The controller 780 may include a multimedia module 781 for multimedia playback. The multimedia module 781 may be provided in the controller 180, or may be provided separately from the controller 780.

The controller 780 may perform pattern recognition processing, by which writing or drawing input to the touchscreen is perceived as characters or images.

The power supply unit 790 may supply power required to operate the respective components upon receiving external power or internal power under the control of the controller 780.

The camera device 200 may be disposed on the body 850 of the portable terminal 200A such that the incident surface 8A of the optical member 40 is disposed parallel to one surface (e.g., rear surface or front surface) of the body 850. In an example, the second actuator 320, the first actuator 310, and the image sensing unit 330 may be arranged in a direction oriented from the upper end of the body 850 of the portable terminal 200A toward the lower end thereof. Another embodiment may be configured such that the camera device disposed as shown in FIG. 27 is rotated at 90 degrees. That is, the second actuator 320, the first actuator 310, and the image sensing unit 330 may be arranged in a direction oriented from a first long side surface of the body 850 of the portable terminal 200A toward a second long side surface thereof. Due to this placement, the embodiments may reduce spatial restrictions when the camera device 200 is mounted in the portable device 200A, and may improve the freedom of design of the portable device.

The features, structures, effects, and the like described above in the embodiments are included in at least one embodiment of the present disclosure, but are not necessarily limited to only one embodiment. Furthermore, the features, structures, effects, and the like exemplified in the respective embodiments may be combined with other embodiments or modified by those skilled in the art. Therefore, content related to such combinations and modifications should be construed as falling within the scope of the present disclosure.

### [Industrial Applicability]

Embodiments may be used for a camera device capable of correcting deviation (or tilt) of an optical axis (or optical center) caused by distortion of a lens assembly or a lens, preventing distortion of an image, and improving resolution and an optical instrument including the same.

## Claims

1. A camera device comprising:
a lens assembly comprising a fixed lens group and a first lens group configured to be movable in a first-axis direction;
an image sensor configured to detect light having passed through the fixed lens group and the first lens group;
an optical member configured to emit light to the fixed lens group and to be tiltable with respect to a second axis or a third axis perpendicular to the first axis; and
a controller configured to store a correction value to correct tilt of an optical axis of the lens assembly.

2. The camera device according to claim 1, wherein the correction value is a value related to an initial position of the optical member for correction of distortion of a center of the fixed lens group and a center of the first lens group.

3. The camera device according to claim 1, comprising:
a first position sensor configured to detect displacement of the optical member with respect to the second axis; and
a second position sensor configured to detect displacement of the optical member with respect to the third axis,
wherein the correction value comprises a data value related to output from the first position sensor corresponding to an initial position of the optical member.

4. The camera device according to claim 1, wherein the correction value is a value corresponding to the tilt amount of an optical axis of the lens assembly at a predetermined position of the first lens group.

5. The camera device according to claim 3, wherein the first lens group is a lens for zoom magnification conversion.

6. The camera device according to claim 4, wherein the predetermined position is a position corresponding to a highest magnification among the zoom magnifications of the zoom lens.

7. The camera device according to claim 4, wherein the predetermined position is a position corresponding to a lowest magnification among the zoom magnifications of the zoom lens.

8. The camera device according to claim 4, wherein the predetermined position is a position corresponding to an intermediate magnification between a highest magnification and a lowest magnification among the zoom magnifications of the zoom lens.

9. The camera device according to claim 2, wherein the controller controls tilt of the optical member using the correction value to perform hand-shake compensation operation.

10. The camera device according to claim 9, wherein the controller moves the lens assembly in a direction of the optical axis to perform zoom or autofocus operation in a state of controlling tilt of the optical member using the correction value.
